(19) Europäisches Patentamt
European Patent Office
Office européen des brevets

(11) EP 2 804 024 B1

(12) **EUROPEAN PATENT SPECIFICATION**

(45) Date of publication and mention of the grant of the patent:
**09.11.2016 Bulletin 2016/45**

(51) Int Cl.:
*G02F 1/13363* (2006.01)

(21) Application number: **14002136.1**

(22) Date of filing: **22.06.2011**

(54) **SINGLE LAYER CELLULOSE ESTER FILM HAVING REVERSED OPTICAL DISPERSION**
EINLAGIGE CELLULOSEESTERFOLIE MIT UMGEKEHRTER OPTISCHER DISPERSION
FILM D'ESTER DE CELLULOSE MONOCOUCHE À DISPERSION OPTIQUE INVERSÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.07.2010 US 360941 P**
**10.06.2011 US 201113157580**

(43) Date of publication of application:
**19.11.2014 Bulletin 2014/47**

(62) Document number(s) of the earlier application(s) in accordance with Art. 76 EPC:
**11731588.7 / 2 588 895**

(73) Proprietor: **EASTMAN CHEMICAL COMPANY**
**Kingsport TN 37660 (US)**

(72) Inventors:
- **Wang, Bin**
**Kingsport, TN 37660 (US)**
- **Buchanan, Charles, Michael**
**Bluff City, TN 37618 (US)**

(74) Representative: **Ricker, Mathias**
**Wallinger Ricker Schlotter Tostmann**
**Patent- und Rechtsanwälte**
**Zweibrückenstrasse 5-7**
**80331 München (DE)**

(56) References cited:
**JP-A- 2004 294 798**
**JP-A- 2006 293 342**
**JP-A- 2008 197 561**
**JP-A- 2010 044 245**
**US-A1- 2003 020 208**
**US-A1- 2008 107 829**
**US-A1- 2008 192 192**
**US-A1- 2010 029 927**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 804 024 B1

## Description

CROSS REFERENCES TO RELATED APPLICATIONS

This application claims the benefit of United States Provisional Application Serial No. 61/360,941 filed July 2, 2010.

FIELD OF THE INVENTION

The present invention generally relates to cellulose ester films. In particular, the invention relates to multilayer cellulose ester films having reversed optical dispersion. The films are particularly suitable for use as an optical waveplate in liquid crystal displays.

BACKGROUND OF THE INVENTION

An optical waveplate (also known as an optical retarder) is one of the key optical components to control the polarization state of polarized light. It has been widely used in different kinds of polarizing optical systems, such as optical imaging, fiber optical telecommunication, wave front correction, polarization controller, and liquid crystal displays (LCDs). Two important characteristics of a waveplate are its optical retardation and optical dispersion. A waveplate can have a strong or weak optical retardation value as well as a normal, flat, or reversed optical dispersion.

Figure 1 shows a waveplate 3 sandwiched between two crossed polarizers 1 and 2. For normal incident light, the transmission T (output light) depends on following relationship:

$$T \propto \sin^2 2\beta \cdot \sin^2[\frac{\pi \Delta n d}{\lambda_0}] \qquad (1)$$

where d is the waveplate thickness; $\Delta n = n_x - n_y$ where $n_x$ and ny are the refractive indices of the waveplate in x and y directions (in-plane); β is the angle between the waveplate optical axis (i.e., the $n_x$ axis) and the polarizer 1 transmission axis; and $\lambda_0$ is the wavelength in free space of the input light. The transmission axis of the polarizer 1 is in the horizontal direction, while the transmission axis of the polarizer 2 is in the vertical direction. The input light can be polarized or non-polarized. The output light Tis always polarized and its transmission depends on two terms: (i) $\sin^2 2\beta$; and (ii) $\sin^2(\pi\Delta nd/\lambda_0)$.

If the second term has a constant value, ***T*** only depends on the orientation of the waveplate. When β = 0° or 90°, Tis minimum; when β = 45°, Tis maximum. On the other hand, if the first term has a constant value, such as 1.0, which corresponds to β = 45°, T only depends on $\Delta nd/\lambda_0$. The term Δnd is defined as the waveplate in-plane retardation, $R_e$:

$$R_e = \Delta nd = (n_x - n_y)d \qquad (2)$$

Therefore, for normal incident light, the transmission *T* depends on $R_e/\lambda_0$. The related out-of-plane retardation $R_{th}$ is defined as:

$$R_{th} = \left[ n_z - \frac{(n_x + n_y)}{2} \right] d \qquad (3)$$

where $n_z$ is the waveplate refractive index in the z direction (out-of-plane).

If the incident light contains multiple wavelengths, to achieve the same transmission for all wavelengths, such as red (R), green (G), and blue (B) light, $R_e$-$\lambda_0$ must be a constant. For example, $R_e(R) / \lambda_0(R) = R_e(G) / \lambda_0(G) = R_e(B) / \lambda_0(B) = 1/4$, which is termed as an achromatic or a broadband quarter waveplate. Figure 2 shows an ideal achromatic quarter waveplate plot between $R_e$ and λ.

If $R_e$ of a waveplate decreases as the wavelength λ increases, this waveplate has normal optical dispersion. Most polymers such as polyethylene, polypropylene, polycarbonate, and polystyrene, exhibit this kind of dispersion. If $R_e$ of a waveplate increases as the wavelength λ increases, this waveplate has reversed optical dispersion.

Figure 2 indicates that an ideal achromatic waveplate should have reversed optical dispersion. In reality, this is very difficult to achieve (cf. Masayuki Yamaguchi et al., Macromolecules 2009, 42, 9034-9040; Akihiko Uchiyama et al., Jpn. J. Appl. Phys., Vol. 42 (2003) 3503-3507; Akihiko Uchiyama et al., Jpn. J. Appl. Phys., Vol. 42 (2003) 6941-6945). To improve the image quality of LCDs, controlling the optical dispersion of a waveplate plays an important role and a waveplate exhibiting reversed optical dispersion is highly desirable. Furthermore, considering the complexity of a typical LCD and dispersions of the other layers, a waveplate often needs to have optimized optical dispersion properties.

A useful way to quantify optical dispersion is by the parameters $A_{Re}$, $B_{Re}$, $A_{Rth}$ and $B_{Rth}$:

$$A_{Re} = R_e(450) / R_e(550) \qquad (4)$$

$$B_{Re} = R_e(650) / R_e(550) \qquad (5)$$

$$A_{Rth} = R_{th}(450) / R_{th}(550) \qquad (6)$$

$$B_{Rth} = R_{th}(650) / R_{th}(550) \qquad (7)$$

where 450, 550, and 650 in the parentheses are the wavelength in nanometers. For an ideal achromatic waveplate, $A_{Re} = A_{Rth} = 0.818$, and $B_{Re} = B_{Rth} = 1.182$, and the dispersion curve is a linear straight line as shown in Figure 2. If a waveplate has non-ideal reversed dispersion, $A_{Re}$ and $A_{Rth}$ have to be less than 1.0, and $B_{Re}$ and $B_{Rth}$ have to be greater than 1.0. In reality, most materials with reversed dispersion do not have linear relation. If $A_{Re}$, $A_{Rth}$, $B_{Re}$ and $B_{Rth}$ are all equal to 1.0, the waveplate has flat dispersion. If $A_{Re}$ and $A_{Rth}$ is greater than 1.0, and $B_{Re}$ and $B_{Rth}$ is less than 1.0, the waveplate has normal dispersion.

Unlike most other polymers, waveplates made from cellulose esters such as cellulose acetate (CA), cellulose acetate propionate (CAP), and cellulose acetate butyrate (CAB), often have reversed optical dispersions because of their polymer chain conformation and chemical compositions. But the values of $A_{Re}$, $B_{Re}$, $A_{Rth}$ and $B_{Rth}$ also depend on other factors such as plasticizers, additives, and processing conditions for making the waveplate. Also, cellulose esters with very low hydroxyl level could exhibit normal optical dispersions.

In some LCD applications, waveplates with higher optical retardation and more reversed dispersion are desired, where $A_{Re}$, $B_{Re}$, $A_{Rth}$ and $B_{Rth}$ are close to an ideal achromatic waveplate. However, our studies have found that, typically, there is a tradeoff between having a higher optical retardation and more reversed dispersion. In general, we have found that when a waveplate has higher optical retardation values, the waveplate often exhibits relatively flat dispersion curves. On the other hand, when the waveplate exhibits a more reversed dispersion, the retardation is relatively low and cannot meet some requirements for certain applications. As an illustration, Figures 3(a) and 3(b) show the in-plane and out-of-plane optical dispersion curves of two types of cellulose esters (CEs). CE1, which has a low optical retardation ($R_e(550)_{CE1}$ = 31.35 nm and $R_{th}(550)_{CE1}$ = -60.32 nm), has a more reversed optical dispersion than CE2. CE2, which has a high optical retardation ($R_e(550)_{CE2}$ = 88.40nm and $Rt_h(550)_{CE2}$ = -211.20 nm), has a more flat optical dispersion relative to CE1.

Thus, there is a need in the art for an optical waveplate that has both high optical retardation and more reversed optical dispersion at the same time. The present invention addresses this need as well as others that will become apparent from the following description and claims.

Single-layer films of substituted cellulose are disclosed in US 2008/107829 A1, US 2010/029927 A1, JP 2004 294798 A, JP 2010 044245 A, JP 2008 197561A, JP 2006 293342 A, US 2008/192192 A1 and US 2003/020208 A1.

## SUMMARY OF THE INVENTION

The invention relates to a single-layer film comprising a layer (A) as defined in independent claims 1, 5 and 6, and to a single-layer film comprising a layer (B) as defined in independent claims 7 and 10. The invention further relates to an optical waveplate for a liquid crystal display comprising the single-layer film according to the invention and to a liquid crystal display which comprises the optical waveplate.

The multilayer films as referred to in the following description and examples are not according to the invention.

BRIEF DESCRIPTION OF THE DRAWINGS

Figure 1 is an illustration of an optical waveplate sandwiched between two crossed polarizers.
Figure 2 is an ideal achromatic quarter waveplate optical dispersion graph.
Figure 3(a) is an in-plane optical dispersion graph of two different cellulose ester films.
Figure 3(b) is an out-of-plane optical dispersion graph of two different cellulose ester films.
Figure 4(a) shows a multilayer film in an A-B configuration.
Figure 4(b) shows a multilayer film in an A-B-A configuration.
Figure 5 shows the structure of a broadband quarter waveplate according to the prior art.

DETAILED DESCRIPTION OF THE INVENTION

There is provided a multilayer film having reversed optical dispersion. The film comprises:

(a) a layer (A) comprising cellulose ester having a degree of substitution of hydroxyl groups ($DS_{OH}$) of 0 to 0.5; and
(b) a layer (B) comprising cellulose ester having a $DS_{OH}$ of 0.5 to 1.3, provided that when the $DS_{OH}$ of layer (A) and layer (B) are both 0.5, the cellulose ester of layer (A) is different from the cellulose ester of layer (B).

The cellulose esters making up the individual layers (A) and (B) may be randomly or regioselectively substituted. Regioselectivity can be measured by determining the relative degree of substitution (RDS) at $C_6$, $C_3$, and $C_2$ in the cellulose ester by carbon 13 NMR (Macromolecules, 1991, 24, 3050-3059). In the case of one acyl substituent or when a second acyl substituent is present in a minor amount (DS < 0.2), the RDS can be most easily determined directly by integration of the ring carbons. When 2 or more acyl substituents are present in similar amounts, in addition to determining the ring RDS, it is sometimes necessary to fully substitute the cellulose ester with an additional substituent in order to independently determine the RDS of each substituent by integration of the carbonyl carbons. In conventional cellulose esters, regioselectivity is generally not observed and the RDS ratio of $C_6/C_3$, $C_6/C_2$, or $C_3/C_2$ is generally near 1 or less. In essence, conventional cellulose esters are random copolymers. In contrast, when adding one or more acylating reagents to cellulose dissolved in an appropriate solvent, the $C_6$ position of cellulose are acylated much faster than $C_2$ and $C_3$. Consequentially, the $C_6/C_3$ and $C_6/C_2$ ratios are significantly greater than 1, which is characteristic of a 6,3- or 6,2-enhanced regioselectively substituted cellulose ester.

The cellulose esters useful in the present invention can be prepared by any known means for preparing cellulose esters.

Examples of randomly substituted cellulose esters having a $DS_{OH}$ from about 0.0 to about 0.5 useful for layer A are described in US 2009/0054638 and US 2009/0050842; the contents of which are hereby incorporated by reference with the exception of blends of two or more cellulose esters.

The cellulose esters of US 2009/0054638 and US 2009/0050842 are mixed esters, based for example, on acetyl, propionyl, and/or butyryl, but longer chain acids can also be used. Mixed esters can provide adequate solubility for processing and reduce gel formation. The non-acetyl degree of substitution is termed as $DS_{NAC}$. The propionyl/butyryl degree of substitution ($DS_{(Pr+Bu)}$) is a subgenus of $DS_{NAC}$, and refers to the non-acetyl degree of substitution wherein the non-acetyl groups are propionyl and/or butyryl groups. In one embodiment, acetyl is the primary ester forming group. In another embodiment, the cellulose ester is a cellulose acetate propionate (CAP) ester. In another embodiment, the cellulose ester is a cellulose acetate butyrate (CAB) ester. In another embodiment, the cellulose ester is a cellulose acetate propionate butyrate (CAPB) ester. In another embodiment, the cellulose ester is a mixed cellulose ester of acetate and comprises at least one ester residue of an acid chain having more than 4 carbon atoms, such as, for example, pentonoyl or hexanoyl. Such higher acid chain ester residues may include, but are not limited to, for example acid chains esters with 5, 6, 7, 8, 9, 10, 11, and 12 carbon atoms. They may also include acid chains esters with more than 12 carbon atoms. In another embodiment, the mixed cellulose acetate ester that comprises at least one ester residue of an acid chain having more than 4 carbon atoms may also comprise propionyl and/or butyryl groups.

In one embodiment, the mixed ester system has a total degree of substitution of from 2.8 to 3 (i.e., the hydroxyl DS is between 0 and 0.2). In another embodiment, the total degree of substitution is from 2.83 to 2.98, and in yet another embodiment, the total degree of substitution is from 2.85 to 2.95. In another embodiment of the invention, the total degree of substitution is such that the total hydroxyl level is low enough to produce the desired retardation behavior.

The cellulose esters described in US 2009/0054638 and US 2009/0050842 can be prepared by a number of synthetic routes, including, but not limited to, acid-catalyzed esterification and hydrolysis of cellulose.

For example, as described in US 2009/0054638 and US 2009/0050842, cellulose (75 g) was fluffed in a metal lab blender in three batches. This fluffed cellulose was treated in one of the following four pretreatments.

Pretreatment A: The fluffed cellulose was soaked in mixtures of acetic acid and propionic acid. Then the reaction was carried out as shown below.

Pretreatment B: The fluffed cellulose was soaked in 1 liter of water for about 1 hour. The wet pulp was filtered and washed four times with acetic acid to yield acetic acid wet pulp and the reaction carried out as shown below.

Pretreatment C: The fluffed cellulose was soaked in about 1 liter of water for about 1 hour. The wet pulp was filtered and washed four times with propionic acid to yield propionic acid wet pulp and the reaction carried out as shown below.

Pretreatment D: The fluffed cellulose was soaked in about 1 liter of water for about 1 hour. The wet pulp was filtered and washed three times with acetic acid and three times with propionic acid to yield propionic wet pulp and the reaction carried out as shown below.

Reaction: The acid wet pulp from one of the pretreatments above was then placed in a 2-liter reaction kettle and acetic or propionic acid was added. The reaction mass was cooled to 15°C, and a 10°C solution of acetic anhydride and propionic anhydride, and 2.59 g of sulfuric acid were added. After the initial exotherm, the reaction mixture was held at about 25 °C for 30 minutes and then the reaction mixture was heated to 60°C. When the proper viscosity of the mixture was obtained, a 50-60°C solution of 296 mL of acetic acid and 121 mL of water was added. This mixture was allowed to stir for 30 minutes and then a solution of 4.73 g of magnesium acetate tetrahydrate in 385 mL of acetic acid and 142 mL of water was added. This reaction mixture was then precipitated by one of the methods shown below.

Precipitation Method A: The reaction mixture was precipitated by the addition of 8 L of water. The resulting slurry was filtered and washed with water for about four hours and then dried in a 60°C forced air oven to yield cellulose acetate propionate.

Precipitation Method B: The reaction mixture was precipitated by the addition of 4 L of 10% acetic acid and then hardened by addition of 4 L of water. The resulting slurry was filtered and washed with water for about four hours and then dried in a 60°C forced air oven to yield cellulose acetate propionate.

Examples of regioselectively substituted cellulose esters having a $DS_{OH}$ from about 0.0 to about 0.5 useful for layer A and regioselectively substituted cellulose esters having a $DS_{OH}$ from about 0.5 to about 1.3 useful for layer B are described in US 2010/0029927, U.S. Patent Appl. No. 12/539,817, and WO 2010/019245; the contents of which are hereby incorporated by reference.

In general, US 2010/0029927, U.S. Patent Appl. No. 12/539,817, and WO 2010/019245 concern dissolution of cellulose in an ionic liquid, which is then contacted with an acylating reagent. Accordingly, for the present invention, cellulose esters can be prepared by contacting the cellulose solution with one or more $C_1$-$C_{20}$ acylating reagents at a contact temperature and contact time sufficient to provide a cellulose ester with the desired degree of substitution (DS) and degree of polymerization (DP). The cellulose esters thus prepared generally comprise the following structure:

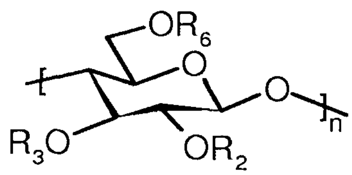

where $R_2$, $R_3$, and $R_6$ are hydrogen (with the proviso that $R_2$, $R_3$, and $R_6$ are not hydrogen simultaneously) or $C_1$-$C_{20}$ straight- or branched-chain alkyl or aryl groups bound to the cellulose via an ester linkage.

The cellulose esters prepared by these methods may have a DS from about 0.1 to about 3.0, preferably from about 1.7 to about 3.0. The degree of polymerization (DP) of the cellulose esters prepared by these methods will be at least 10. More preferred is when the DP of the cellulose esters is at least 50. Yet further preferred is when the DP of the cellulose esters is at least 100. Most preferred is when the DP of the cellulose esters is at least 250. In yet another embodiment, the DP of the cellulose esters is from about 5 to about 100. More preferred is when the DP of the cellulose esters is from about 10 to about 50.

The preferred acylating reagents are one or more $C_1$-$C_{20}$ straight- or branched-chain alkyl or aryl carboxylic anhydrides, carboxylic acid halides, diketene, alkyl diketene, or acetoacetic acid esters. Examples of carboxylic anhydrides include, but are not limited to, acetic anhydride, propionic anhydride, butyric anhydride, isobutyric anhydride, valeric anhydride, hexanoic anhydride, 2-ethylhexanoic anhydride, nonanoic anhydride, lauric anhydride, palmitic anhydride, stearic anhydride, benzoic anhydride, substituted benzoic anhydrides, phthalic anhydride, and isophthalic anhydride. Examples of carboxylic acid halides include, but are not limited to, acetyl, propionyl, butyryl, hexanoyl, 2-ethylhexanoyl, lauroyl, palmitoyl, benzoyl, substituted benzoyl, and stearoyl chlorides. Examples of acetoacetic acid esters include, but are not limited to, methyl acetoacetate, ethyl acetoacetate, propyl acetoacetate, butyl acetoacetate, and tert-butyl acetoacetate. The most preferred acylating reagents are $C_2$-$C_9$ straight- or branched-chain alkyl carboxylic anhydrides selected from the group acetic anhydride, propionic anhydride, butyric anhydride, 2-ethylhexanoic anhydride,

nonanoic anhydride, and stearic anhydride. The acylating reagents can be added after the cellulose has been dissolved in the ionic liquid. If so desired, the acylating reagent can be added to the ionic liquid prior to dissolving the cellulose in the ionic liquid.

In the esterification of cellulose dissolved in ionic liquids, the preferred contact temperature is from about 20 °C to about 140 °C. A more preferred contact temperature is from about 50 °C to about 100 °C. The most preferred contact temperature is from about 60 °C to about 80 °C.

In the esterification of cellulose dissolved in ionic liquids, the preferred contact time is from about 1 min to about 48 h. A more preferred contact time is from about 10 min to about 24 h. The most preferred contact time is from about 30 min to about 5 h.

Examples of randomly substituted cellulose esters having a $DS_{OH}$ from about 0.5 to about 1.3 useful for layer B are described in US 2009/0096962, which is hereby incorporated by reference.

The cellulose esters described in US 2009/0096962 can be prepared by a number of synthetic routes, including, but not limited to, acid-catalyzed hydrolysis of a previously prepared cellulose ester in an appropriate solvent or mixture of solvents and base-catalyzed hydrolysis of a previously prepared cellulose ester in an appropriate solvent or mixture of solvents. Additionally, high $DS_{OH}$ cellulose esters can be prepared from cellulose by a number of known methods. For additional details on synthetic routes for preparing high $DS_{OH}$ cellulose esters, see U.S. Pat. No. 2,327,770; S. Gedon et al., "Cellulose Esters, Organic Esters," from Kirk-Othmer Encyclopedia of Chemical Technology, Fifth Edition, Vol. 5, pp. 412-444, 2004, John Wiley & Sons, Hoboken, N.J.; and D. Klemm et al., "Comprehensive Cellulose Chemistry: Volume 2 Functionalization of Cellulose," Wiley-VCH, New York, 1998.

In one embodiment, conventional cellulose esters (for example, but not limited to CAB-381-20 and CAP-482-20, commercially available from Eastman Chemical Company) are dissolved in an organic carboxylic acid, such as acetic acid, propionic acid, or butyric acid, or mixture of organic carboxylic acids, such as acetic acid, propionic acid, or butyric acid to form a dope. The resulting cellulose ester dopes can be treated with water and an inorganic acid catalyst, including, but not limited to, sulfuric acid, hydrochloric acid, and phosphoric acid, to hydrolyze the ester groups to increase the $DS_{OH}$.

The same hydrolysis protocols described above can be accomplished with non-acidic catalysts, such as bases. Additionally, solid catalysts such as ion exchange resins can be used. Additionally, the solvent used to dissolve the initial cellulose ester prior to hydrolysis can be an organic solvent that is not an organic acid solvent; examples of which include, but are not limited to, ketones, alcohols, dimethyl sulfoxide (DMSO), and N,N-dimethylformamide (DMF).

Additional methods for preparing high $DS_{OH}$ cellulose esters include preparation of the high $DS_{OH}$ cellulose esters from cellulose from wood or cotton. The cellulose can be a high-purity dissolving grade wood pulp or cotton linters. The cellulose can, alternatively, be isolated from any of a number of biomass sources including, but not limited to, corn fiber.

In one embodiment of this invention, additives such as plasticizers, stabilizers, UV absorbers, antiblocks, slip agents, lubricants, dyes, pigments, retardation modifiers, etc. may be mixed with the cellulose esters. Examples of these additives are found in US 2009/0050842, US 2009/0054638, and US 2009/0096962.

The multilayer film can be made by solvent co-casting, melt co-extrusion, lamination, or a coating process. These procedures are generally known in the art. Examples of solvent co-casting, melt co-extrusion, lamination, and coating methods to form multilayer structures are found in US 2009/0050842, US 2009/0054638, and US 2009/0096962.

Further examples of solvent co-casting, melt co-extrusion, lamination, and coating methods to form a multilayer structure are found in US 4,592,885; US 7,172,713; US 2005/0133953; and US 2010/0055356.

The multilayer film may be configured in an A-B structure or an A-B-A structure (Figures 4(a) and 4(b), respectively). In the case of a bi-layer structure, the layers are made using different cellulose esters. For the tri-layer structure, the top and bottom layers are made using the same cellulose ester and the middle layer is made using a different cellulose ester. Other configurations are possible such as A-X-B where X is an adhesive or tie layer, and B-A-B. The thickness of each layer can be the same or different. By varying the thickness of each layer, the desired optical retardation and reversed optical dispersion can be obtained. The thickness of layer A before stretching can range from 5 $\mu$m to 50 $\mu$m, and the thickness of layer B before stretching can range from 30 $\mu$m to 100 $\mu$m.

To obtain certain in-plane retardation ($R_e$) values, the multilayer film may be stretched. By adjusting the stretch conditions such as stretch temperature, stretch ratio, stretch type - uniaxial or biaxial, pre-heat time and temperature, and post-stretch annealing time and temperature; the desired $R_e$, $R_{th}$, and reverse optical dispersion can be achieved. The stretching temperature can range from 130°C to 200°C. The stretch ratio can range from 1.0 to 1.4 in the machine direction (MD) and can range from 1.1 to 2.0 in the transverse direction (TD). The pre-heat time can range from 10 to 300 seconds, and the pre-heat temperature can be the same as the stretch temperature. The post-annealing time can range from 0 to 300 seconds, and the post-annealing temperature can range from 10°C to 40°C below the stretching temperature.

For applications such as an optical waveplate for LCDs, certain optical retardations $R_e$ and $R_{th}$ as well as optical dispersion are desired. Hence, in one embodiment of this invention, a single-layer film of layer A after uniaxial or biaxial stretching has an $R_e(550)$ from -80 nm to -10 nm, an $R_{th}(550)$ from 0 nm to 100 nm, $A_{Re}$ and $A_{Rth}$ from about 1.0 to 1.6,

and $B_{Re}$ and $B_{Rth}$ from about 1.0 to 0.6. In another embodiment, a single-layer film of layer A after stretching in at least one direction has an $R_e(550)$ from about 10 nm to 60 nm, $R_{th}(550)$ from about 0 nm to -60 nm, $A_{Re}$ and $A_{Rth}$ from about 0.5 to 1.0, and $B_{Re}$ and $B_{Rth}$ from about 1.0 to 1.3. In yet another embodiment, a single-layer film of layer A after uniaxial or biaxial stretching has an $R_e(550)$ from -60 nm to -20 nm, $R_{th}(550)$ from 0 nm to 60 nm, $A_{Re}$ and $A_{Rth}$ from 1.2 to 1.6, and $B_{Re}$ and $B_{Rth}$ from 0.5 to 0.8. In another embodiment, a single-layer film of layer A after stretching in at least one direction has an $R_e(550)$ from about 10 nm to 40 nm, $R_{th}(550)$ from 0 nm to -40 nm, $A_{Re}$ and $A_{Rth}$ from about 0. 5 to 0.8, and $B_{Re}$ and $B_{Rth}$ from about 1.1 to 1.3. In still yet another embodiment, a single-layer film of layer A after uniaxial or biaxial stretching has an $R_e(550)$ from about -50 nm to -30 nm, $R_{th}(550)$ from about 0 nm to 40 nm, $A_{Re}$ and $A_{Rth}$ from about 1.4 to 1.6, and $B_{Re}$ and $B_{Rth}$ from about 0.5 to 0.7. In another embodiment, a single-layer film of layer A after stretching in at least one direction has an $R_e(550)$ from about 15 nm to 30 nm, $R_{th}(550)$ from about 0 nm to -30 nm, $A_{Re}$ and $A_{Rth}$ from about 0.5 to 0.7, and $B_{Re}$ and $B_{Rth}$ from about 1.2 to 1.3.

In embodiment of this invention, a single-layer film of layer B after uniaxial or biaxial stretching has an $R_e(550)$ from about 10 nm to 350 nm, $R_{th}(550)$ from about -100 nm to -400 nm, $A_{Re}$ and $A_{Rth}$ from about 0.97 to 1.1, and $B_{Re}$ and $B_{Rth}$ from about 0.97 to 1.05. In another embodiment, a single-layer film of layer B after uniaxial or biaxial stretching has an $R_e(550)$ from about 45 nm to 300 nm, $R_{th}(550)$ from about -150 nm to -350 nm, $A_{Re}$ and $A_{Rth}$ from about 0. 97 to 1.0, and $B_{Re}$ and $B_{Rth}$ from about 1.0 to 1.05. In another embodiment, a single-layer film of layer B after uniaxial or biaxial stretching has $R_e(550)$ from about 55 nm to 280 nm, $R_{th}(550)$ from about -180 nm to - 300 nm, $A_{Re}$ and $A_{Rth}$ from about 0.97 to 0.99, and $B_{Re}$ and $B_{Rth}$ from about 1.0 to 1.06.

After uniaxial or biaxial stretching, the multilayer film can have an $R_e(550)$ from about 10 nm to 300 nm, $R_{th}(550)$ from about -50 nm to -300 nm, $A_{Re}$ and $A_{Rth}$ from about 0.95 to 1.0, and $B_{Re}$ and $B_{Rth}$ from about 1.0 to 1.06. In another embodiment, the multilayer film after uniaxial or biaxial stretching can have an $R_e(550)$ from about 40 nm to 280 nm, $R_{th}(550)$ from about -70 nm to -300 nm, $A_{Re}$ and $A_{Rth}$ from about 0.90 to 0.97, and $B_{Re}$ and $B_{Rth}$ from about 1.05 to 1.1. In another embodiment, the multilayer film after uniaxial or biaxial stretching can have an $R_e(550)$ from about 55 nm to 250 nm, $R_{th}(550)$ from about -70 nm to -280 nm, $A_{Re}$ and $A_{Rth}$ from about 0.82 to 0.95, and $B_{Re}$ and $B_{Rth}$ are from about 1.06 to 1.18.

The $R_e$ and $R_{th}$ values reported above for wavelength 550 nm are based on a film thickness of 30 to 120 $\mu$m.

In yet another embodiment, layer A and layer B each can have an $R_e$ of 0 to 280 nm and an $R_{th}$ of -400 to +200 nm, measured at a film thickness of 30 to 120 $\mu$m and at a light wavelength of 550 nm.

Currently, it is common practice to use two or more compensation films to obtain LCDs with adequate viewing angles, contrast ratios, and color shifts. For example, a broadband quarter waveplate is achieved by combining one half-waveplate with one quarter-waveplate. This is shown in Figure 5. (Cf. Pancharatnam, Proceedings of the Indian Academy of Science, Sec. A., Vol. 41., 130-136 (1955); Tae-Hoon Yoon et al., Optics Letters, Vol. 25, No. 20 1547-1549, 2000.) Both the half-waveplate and the quarter-waveplate in Figure 5 have normal optical dispersion. After laminating them together with certain orientation, the combination has the retardation of a quarter-waveplate and reversed optical dispersion. This practice, however, is undesirable because it consumes more materials, is complicated to construct, and results in a thick display. In contrast, we have surprisingly found that the multilayer films of the present invention (such as shown in Figures 4(a) and 4(b)) can provide optical waveplates with excellent viewing angles, contrast ratios, and color shifts when used as a single waveplate in LCDs. Moreover, the individual layers of the films of the present invention do not need special orientation relative to each other in order to have reversed optical dispersion.

Thus, in another aspect, the-present invention provides an optical waveplate for a liquid crystal display comprising the single-layer film according to the invention.

In yet another aspect, the present invention provides a liquid crystal display which comprises the optical waveplate according to the present invention.

This invention can be further illustrated by the following working examples, although it should be understood that these examples are included merely for purposes of illustration and are not intended to limit the scope of the invention.

## EXAMPLES

### General Procedures

Solution preparation: Cellulose ester solids and 10 wt% plasticizer (based on the total weight of solids) were added to a 87/13 wt% solvent mixture of $CH_2Cl_2$/methanol (or ethanol) to give a final concentration of 5-30 wt% based on cellulose ester + plasticizer. The mixture was sealed, placed on a roller, and mixed for 24 hours to create a uniform solution.

Solvent casting of a single-layer film: The solution prepared above was cast onto a glass plate using a doctor blade to obtain a film with the desired thickness. Casting was conducted in a fume hood with relative humidity controlled at 45%~50%. After casting, the film was allowed to dry for 45 minutes under a cover pan to reduce the rate of solvent evaporation before the pan was removed. The film was allowed to dry for 15 minutes, then the film was peeled from the

glass and annealed in a forced air oven for 10 minutes at 100°C. After annealing at 100ºC, the film was annealed at a higher temperature (120ºC) for another 10 minutes.

Film stretching was carried out on a Brückner Karo IV laboratory film stretcher. Stretching conditions, such as stretch ratio (MD: machine direction, TD: transverse direction), stretch temperature, and pre-heating and post-annealing time and temperature, will affect the film final optical retardations and dispersion. These conditions can be varied to achieve specific optical retardation and dispersion according to the requirements of the application.

Film optical retardation and dispersion measurements were made using a J.A. Woollam M-2000V Spectroscopic Ellipsometer having a spectral range from 370 to 1000 nm. RetMeas (Retardation Measurement) program from J.A. Woollam Co., Inc. was used to obtain optical film in-plane ($R_e$) and out-of-plane ($R_{th}$) retardations. Unless specified otherwise, all reported values were measured at 589 nm.

Film haze was measured by UltraScan XE from HunterLab using standard calibration and measurement procedures.

Example 1

This example shows the optical retardation and dispersion of a single-layer film suitable for layer B in an optical waveplate.

Following the general solution preparation, a randomly substituted cellulose acetate propionate ($DS_{Ac}$ = 0.14, $DS_{Pr}$ = 1.71, $DS_{OH}$ = 1.15) was used to prepare the following solution for Example 1:

| | |
|---|---|
| Total solids | 24 g |
| Cellulose ester | 21.6 g |
| Plasticizer | 2.4 g triphenyl phosphate |
| Total solvent | 176 g |
| Methylene chloride | 153.12 g |
| Methanol | 22.88 g |

Following the general solvent cast procedures described above, the solution for Example 1 was used to obtain single-layer films. The films were annealed at 100°C and 120°C for 10 minutes, respectively, before they were uniaxially or simultaneous biaxially stretched under different stretching conditions. The stretching conditions and optical and film data of these films are listed in Table 1.

Table 1. Optical properties for a single-layer cellulose acetate propionate film ($DS_{Ac}$ = 0.14, $DS_{Pr}$ = 1.71, $DS_{OH}$ = 1.15).

| Run | MDxTD | Stretch Temp. (°C) | $R_e$ (nm) | $R_{th}$ (nm) | $A_{Re}$ | $B_{Re}$ | $A_{Rth}$ | $B_{Rth}$ | Film Thickness (μm) |
|---|---|---|---|---|---|---|---|---|---|
| 1 | 1.00x1.40 | 175 | 152.31 | -301.86 | 0.993 | 1.001 | 0.999 | 0.994 | 68 |
| 2 | 1.00x1.45 | 180 | 146.67 | -271.03 | 0.993 | 1.002 | 0.998 | 0.995 | 68 |
| 3 | 1.00x1.40 | 180 | 135.07 | -275.95 | 0.992 | 1.002 | 0.998 | 0.994 | 70 |
| 4 | 1.00x1.35 | 177 | 105.94 | -248.51 | 0.994 | 1.002 | 0.998 | 0.995 | 70 |
| 5 | 1.00x1.35 | 180 | 120.68 | -257.34 | 0.994 | 1.002 | 1.000 | 0.994 | 72 |
| 6 | 1.04x1.26 | 175 | 73.08 | -297.34 | 0.991 | 1.002 | 0.995 | 1.000 | 74 |

Relative to an ideal achromatic waveplate in which $A_{Re}$ = $A_{Rth}$ = 0.818 and $B_{Re}$ = $B_{Rth}$ = 1.182, the data in Table 1 indicate that these films exhibited only a slight reversed dispersion. That is, the dispersion curves of these films were essentially flat.

Example 2

This example shows the optical retardation and dispersion of a single-layer film suitable for layer A in an optical waveplate.

Following the general solution preparation, a randomly (RDS: $C_6$ = 0.92, $C_3$ = 1.00, $C_2$ = 0.96) substituted cellulose acetate propionate ($DS_{Ac}$ = 1.49, $DS_{Pr}$ = 1.44, $DS_{OH}$ = 0.07) was used to prepare the following solution for

Example 2:

| | |
|---|---|
| Total solids | 24 g |
| Cellulose ester | 21.6 g |
| Plasticizer | 2.4 g Triphenyl phosphate |
| Total solvent | 176 g |
| Methylene chloride | 153.12 g |
| Methanol | 22.88 g |

Following the general solvent cast procedures described above, the solution for Example 2 was used to obtain single-layer films. The films were annealed at 100°C and 120°C for 10 minutes, respectively, before they were uniaxially or simultaneous biaxially stretched under different stretching conditions. The stretching conditions and optical and film data of these films are listed in Table 2.

Table 2. Optical properties for a single-layer cellulose acetate propionate film ($DS_{Ac}$ = 1.49, $DS_{Pr}$ = 1.44, $DS_{OH}$ = 0.07).

| Run | MDxTD | Stretch Temp. (°C) | $R_e$ (nm) | $R_{th}$ (nm) | $A_{Re}$ | $B_{Re}$ | $A_{Rth}$ | $B_{Re}$ | Film Thickness (μm) |
|---|---|---|---|---|---|---|---|---|---|
| 7 | 1.00x1.50 | 160 | -9.56 | 11.15 | 1.536 | 0.706 | 1.471 | 0.593 | 58 |
| 8 | 1.00x1.60 | 160 | -11.83 | 12.93 | 1.511 | 0.729 | 1.413 | 0.648 | 56 |
| 9 | 1.00x1.70 | 160 | -12.59 | 10.40 | 1.476 | 0.737 | 1.409 | 0.606 | 48 |
| 10 | 1.00x1.80 | 160 | -16.48 | 10.87 | 1.427 | 0.766 | 1.476 | 0.638 | 48 |
| 11* | 1.00x1.80 | 160 | -53.48 | 31.32 | 1.337 | 0.815 | 1.228 | 0.791 | 80 |
| 12* | 1.00x1.90 | 160 | -57.66 | 32.71 | 1.347 | 0.811 | 1.225 | 0.784 | 86 |
| 13* | 1.00x2.00 | 160 | -55.74 | 27.57 | 1.362 | 0.803 | 1.249 | 0.761 | 80 |
| * = The film was not constrained in the MD while stretching. | | | | | | | | | |

Relative to an ideal achromatic waveplate in which $A_{Re} = A_{Rth} = 0.818$ and $B_{Re} = B_{Rth} = 1.182$, the data in Table 2 show that these films did not exhibit a reversed dispersion. In fact, $A_{Re}$ and $A_{Rth}$ are all greater than 1, while $B_{Re}$ and $B_{Rth}$ are less than one, which is characteristic of a normal dispersion.

Example 3

This example shows the optical retardation and dispersion of a single-layer film suitable for layer A in an optical waveplate.

A regioselectively substituted cellulose benzoate propionate in which the benzoate was primarily located on $C_2$ and $C_3$ was prepared according to U.S. Patent Appl. No. 12/539,817. 325.26 g of tributylmethylammonium dimethylphosphate ([TBMA]DMP) was added to a 3-neck 1 L round bottom flask equipped with mechanical stirring, a $N_2$/vacuum inlet, and an iC10 diamond tipped infrared probe (Mettler-Toledo AutoChem, Inc., Columbia, MD, USA). The flask was placed in a 100°C oil bath and the [TBMA]DMP was stirred 17 h under vacuum (0.8-1.4 mm Hg). 139.4 g of NMP (30 wt%) was added to the [TBMA]DMP, and then the mixture was cooled to room temperature. While stirring rapidly at room temperature, 34.97 g of cellulose (7 wt%, DPv (degree of polymerization as determined from Cuene viscosity) 1080) was added to the solution (9 min addition). The mixture was stirred for an additional 3 min to insure that the cellulose was well dispersed before raising a preheated 100°C oil bath to the flask. Sixty minutes after raising the oil bath, there were no visible particles and the solution was light amber. To insure complete cellulose dissolution, stirring was continued for an additional 70 minutes. 2.1 equivalents of $Pr_2O$ (propionic anhydride) was added drop-wise (28 min addition) to the cellulose solution at 100°C. Ten minutes after the end of $Pr_2O$ addition, a total of 3 equivalents of benzoic anhydride was added as a liquid (melted at 85 °C). The contact mixture was stirred for 80 minutes before the IR probe was removed from the contact mixture. The contact mixture was immediately poured into 2.5 L of MeOH while mixing with a homogenizer. The solids were isolated by filtration then washed 10X with 2 L portions of MeOH before drying overnight at 10 mm Hg, 50°C. Analysis by $^1H$ NMR revealed that the cellulose ester had a $DS_{Bz}$ = 0.29, $DS_{Pr}$ = 2.26, $DS_{OH}$ = 0.45. Analysis by quantitative carbon 13 NMR showed that the product was regioselectively substituted having

a ring RDS of: $C_6$ = 1.00, $C_3$ = 0.68, $C_2$ = 0.84.

Following the general solution preparation, the regioselectively substituted cellulose benzoate propionate was used to prepare the following solution for Example 3:

| | |
|---|---|
| Total solids | 24 g |
| Cellulose ester | 21.6 g |
| Plasticizer | 2.4 g triphenyl phosphate |
| Total solvent | 176 g |
| Methylene chloride | 153.12 g |
| Methanol | 22.88 g |

Following the general solvent cast procedures described above, the solution for Example 3 was used to obtain single-layer films. The films were annealed at 100°C and 120°C for 10 minutes, respectively, before they were uniaxially or simultaneous biaxially stretched under different stretching conditions. The stretching conditions and optical and film data of these films are listed in Table 3.

Table 3. Optical properties for a single-layer cellulose benzoate propionate film ($DS_{Bz}$ = 0.29, $DS_{Pr}$ = 2.26, $DS_{OH}$ = 0.45).

| Run | MDxTD | Stretch Temp. (°C) | $R_e$ (nm) | $R_{th}$ (nm) | $A_{Re}$ | $B_{Re}$ | $A_{Rth}$ | $B_{Rth}$ | Film Thickness (μm) |
|---|---|---|---|---|---|---|---|---|---|
| 14 | 1.00x1.30 | 165 | -32.47 | -6.76 | 1.207 | 0.898 | -19.350 | 16.300 | 58 |
| 15 | 1.00x1.40 | 165 | -41.56 | -22.05 | 1.194 | 0.900 | 0.262 | 1.542 | 56 |
| 16 | 1.00x1.50 | 165 | -55.67 | -24.66 | 1.185 | 0.903 | 0.330 | 1.494 | 54 |
| 17 | 1.00x1.60 | 165 | -83.05 | -17.31 | 1.190 | 0.905 | -0.436 | 2.081 | 64 |
| 18* | 1.00x1.40 | 165 | -110.71 | 57.08 | 1.251 | 0.873 | 1.257 | 0.800 | 88 |
| 19* | 1.00x1.50 | 165 | -125.81 | 59.83 | 1.242 | 0.878 | 1.260 | 0.799 | 86 |
| 20* | 1.00x1.60 | 165 | -156.69 | 75.23 | 1.228 | 0.885 | 1.243 | 0.814 | 90 |
| * = The film was not constrained in the MD while stretching. | | | | | | | | | |

Relative to an ideal achromatic waveplate in which $A_{Re}$ = $A_{Rth}$ = 0.818 and $B_{Re}$ = $B_{Rth}$ = 1.182, the data in Table 2 show that these films did not exhibit a reversed dispersion. In fact, the values for $A_{Re}$ and $B_{Re}$ indicate that the films exhibited a normal dispersion.

Example 4

This example shows the optical retardation and dispersion of a single-layer film suitable for layer A in an optical waveplate.

Following the general solution preparation, a randomly (RDS: $C_6$ = 0.85, $C_3$ = 0.92, $C_2$ = 0.90) substituted cellulose acetate propionate ($DS_{Ac}$ = 0.79, $DS_{Pr}$ = 2.00, $DS_{OH}$ = 0.21) was used to prepare the following solution for Example 4:

| | |
|---|---|
| Total solids | 24 g |
| Cellulose ester | 21.6 g |
| Plasticizer | 2.4 g Triphenyl phosphate |
| Total solvent | 176 g |
| Methylene chloride | 153.12 g |
| Methanol | 22.88 g |

Following the general solvent cast procedures described above, the solution for Example 4 was used to obtain single-layer films. The films were annealed at 100°C and 120°C for 10 minutes, respectively, before they were uniaxially

or simultaneous biaxially stretched under different stretching conditions. The stretching conditions and optical and film data of these films are listed in Table 4.

Table 4. Optical properties for a single-layer cellulose acetate propionate film ($DS_{Ac}$ = 0.79, $DS_{Pr}$ = 2.00, $DS_{OH}$ = 0.21).

| Run | MDxTD | Stretch Temp. (°C) | $R_e$ (nm) | $R_{th}$ (nm) | $A_{Re}$ | $B_{Re}$ | $A_{Rth}$ | $B_{Rth}$ | Film Thickness (μm) |
|---|---|---|---|---|---|---|---|---|---|
| 21 | 1.00x1.50 | 150 | 12.81 | -30.81 | 0.577 | 1.226 | 0.807 | 1.158 | 64 |
| 22 | 1.00x1.60 | 150 | 14.25 | -31.83 | 0.538 | 1.251 | 0.807 | 1.161 | 58 |
| 23 | 1.00x1.70 | 150 | 15.26 | -30.57 | 0.494 | 1.270 | 0.810 | 1.170 | 58 |
| 24* | 1.00x1.70 | 150 | 33.70 | -23.44 | 0.522 | 1.260 | 0.644 | 1.297 | 82 |
| 25* | 1.00x1.80 | 150 | 33.49 | -23.39 | 0.542 | 1.245 | 0.682 | 1.296 | 72 |
| 26* | 1.00x1.90 | 150 | 35.07 | -23.43 | 0.516 | 1.259. | 0.656 | 1.305 | 74 |
| 27* | 1.00x2.00 | 150 | 34.31 | -21.65 | 0.505 | 1.267 | 0.623 | 1.391 | 72 |
| * = The film was not constrained in the MD while stretching. | | | | | | | | | |

Relative to an ideal achromatic waveplate in which $A_{Re}$ = $A_{Rth}$ = 0.818 and $B_{Re}$ = $B_{Rth}$ = 1.182, the data in Table 4 show that these films did exhibit a reversed dispersion. However, the smaller values for $A_{Re}$ (0.49-0.58) and the larger values for $B_{Re}$ (1.22-1.27) showed that the slopes were much larger than that of an ideal achromatic waveplate (cf. Figure 2). Moreover, the $R_{th}$ values (-22 to -32) were too small to be suitable for use in certain LCDs.

Example 5

This example shows the optical retardation and dispersion of a single-layer film suitable for layer A in an optical waveplate.

Following the general solution preparation, a randomly (RDS: $C_6$ = 0.84, $C_3$ = 0.92, $C_2$ = 0.88) substituted cellulose acetate propionate ($DS_{Ac}$ = 0.04, $DS_{Pr}$ = 2.69, $DS_{OH}$ = 0.27) was used to prepare the following solution for Example 5:

| | |
|---|---|
| Total solids | 24 g |
| Cellulose ester | 21.6 g |
| Plasticizer | 2.4 g Triphenyl phosphate |
| Total solvent | 176 g |
| Methylene chloride | 153.12 g |
| Methanol | 22.88 g |

Following the general solvent cast procedures described above, the solution for Example 5 was used to obtain single-layer films. The films were annealed at 100°C and 120°C for 10 minutes, respectively, before they were uniaxially or simultaneous biaxially stretched under different stretching conditions. The stretching conditions and optical and film data of these films are listed in Table 5.

Table 5. Optical properties for a single-layer cellulose acetate propionate film ($DS_{Ac}$ = 0.04, $DS_{Pr}$ = 2.69, $DS_{OH}$ = 0.27).

| Run | MDxTD | Stretch Temp. (°C) | $R_e$ (nm) | $R_{th}$ (nm) | $A_{Re}$ | $B_{Re}$ | $A_{Rth}$ | $B_{Re}$ | Film Thickness (μm) |
|---|---|---|---|---|---|---|---|---|---|
| 28 | 1.00x1.50 | 135 | 19.55 | -45.12 | 0.762 | 1.127 | 0.903 | 1.083 | 60 |
| 29 | 1.00x1.60 | 135 | 21.48 | -43.29 | 0.738 | 1.139 | 0.893 | 1.091 | 56 |
| 30* | 1.00x1.60 | 135 | 46.57 | -30.96 | 0.775 | 1.121 | 0.818 | 1.150 | 76 |
| 31* | 1.00x1.70 | 135 | 49.39 | -30.41 | 0.763 | 1.129 | 0.804 | 1.162 | 74 |

(continued)

| Run | MDxTD | Stretch Temp. (°C) | $R_e$ (nm) | $R_{th}$ (nm) | $A_{Re}$ | $B_{Re}$ | $A_{Rth}$ | $B_{Re}$ | Film Thickness (μm) |
|---|---|---|---|---|---|---|---|---|---|
| 32* | 1.00x1.80 | 135 | 48.19 | -29.15 | 0.749 | 1.135 | 0.799 | 1.173 | 72 |
| 33 | 1.00x1.70 | 135 | 34.88 | -38.98 | 0.742 | 1.141 | 0.856 | 1.118 | 68 |
| 34* | 1.00x2.00 | 135 | 47.98 | -29.41 | 0.722 | 1.147 | 0.773 | 1.197 | 72 |
| * = The film was not constrained in the MD while stretching. | | | | | | | | | |

Relative to an ideal achromatic waveplate in which $A_{Re} = A_{Rth} = 0.818$ and $B_{Re} = B_{Rth} = 1.182$, the data in Table 5 show that these films did exhibit a reversed dispersion, but with a different slope (cf. Figure 2). Again, the $R_{th}$ values (-29 to -45) were too small to be suitable for use in certain LCDs.

Example 6 (not according to the invention)

This example shows the optical retardation and dispersion of a bi-layer optical waveplate prepared by solvent co-casting.

A randomly (RDS: $C_6 = 0.92$, $C_3 = 1.00$, $C_2 = 0.96$) substituted cellulose acetate propionate ($DS_{Ac} = 1.49$, $DS_{Pr} = 1.44$, $DS_{OH} = 0.07$) was used to prepare the following solution for layer A for Example 6:

| | |
|---|---|
| Total solids | 24 g |
| Cellulose ester | 21.6 g |
| Plasticizer | 2.4 g Xylitol Pentaacetate |
| Total solvent | 276 g |
| Methylene chloride | 240.12 g |
| Methanol | 35.88 g |

A randomly substituted cellulose acetate propionate ($DS_{Ac} = 0.14$, $DS_{Pr} = 1.71$, $DS_{OH} = 1.15$) was used to prepare the following solution for layer B for Example 6:

| | |
|---|---|
| Total solids | 24 g |
| Cellulose ester | 21.6 g |
| Plasticizer | 2.4 g Triphenyl phosphate |
| Total solvent | 176 g |
| Methylene chloride | 153.12 g |
| Methanol | 22.88 g |

Following the general procedure for solution preparation, solutions for layers A and B were independently prepared. The solution for layer B was first cast on a glass plate with a doctor blade at a certain thickness and covered by a pan for 5 minutes. The solution for layer A was then cast on top of the layer B and covered by a pan for 45 minutes. The cover pan was removed and the bi-layer film was left on the glass plate for an additional 15 minutes. The film was peeled from the glass plate then annealed at 100°C and 120°C for 10 minutes, respectively. Films made in this manner were uniaxially or simultaneous biaxially stretched under different stretching conditions. The stretching conditions and optical and film data of these films are listed in Table 6.

Table 6. Optical properties for a bi-layer optical waveplate prepared by co-casting.

| Run | MDxTD | Stretch Temp. (°C) | $R_e$ (nm) | $R_{th}$ (nm) | $A_{Re}$ | $B_{Re}$ | $A_{Rth}$ | $B_{Rth}$ | Film Thick -ness (μm) | Haze (%) |
|---|---|---|---|---|---|---|---|---|---|---|
| 35 | 1.00x1.30 | 165 | 116.85 | -266.08 | 0.972 | 1.015 | 0.975 | 1.016 | 100 | 0.44 |
| 36 | 1.10x1.40 | 170 | 80.86 | -268.99 | 0.964 | 1.020 | 0.973 | 1.018 | 80 | 0.47 |

(continued)

| Run | MDxTD | Stretch Temp. (°C) | $R_e$ (nm) | $R_{th}$ (nm) | $A_{Re}$ | $B_{Re}$ | $A_{Rth}$ | $B_{Rth}$ | Film Thick -ness (μm) | Haze (%) |
|---|---|---|---|---|---|---|---|---|---|---|
| 37 | 1.00x1.27 | 165 | 97.43 | -241.59 | 0.972 | 1.015 | 0.971 | 1.020 | 88 | 0.56 |
| 38 | 1.05x1.40 | 170 | 94.07 | -266.24 | 0.966 | 1.017 | 0.978 | 1.014 | 84 | 0.42 |
| 39 | 1.03x1.40 | 175 | 92.83 | -206.28 | 0.965 | 1.017 | 0.973 | 1.017 | 82 | 0.36 |

As shown in Example 1, as a single-layer film, the cellulose ester used to make layer B exhibited large positive values for $R_e$ and large negative values for $R_{th}$, but the film exhibited a flat dispersion. As shown in Example 2, as a single-layer film, the cellulose ester used to make layer A exhibited negative $R_e$ values and positive $R_{th}$ values, and the film exhibited a normal dispersion.

When the two cellulose esters were used to construct a bi-layer optical waveplate, the $R_e$ and $R_{th}$ values of the two cellulose esters were additive. As used herein, the term "additive" does not necessarily refer to the arithmetic sum of the two values, but is simply used in the sense that the absolute value of $R_e$ decreased relative to Example 1 and increased relative to Example 2. Similarly, the absolute value for $R_{th}$ decreased relative to Example 1 and increased relative to Example 2. Significantly, the bilayer optical waveplate now exhibited a reversed dispersion. It is important to note that layers A and B did not have a special orientation with respect to each other. Furthermore, as the data in Table 6 show, these films have very low haze: Hence, the bi-layer optical waveplate simultaneously provided high optical retardation and a reversed dispersion.

Example 7 (not according to the invention)

This example shows the optical retardation and dispersion of a tri-layer optical waveplate prepared by solvent co-casting.

The solutions for layer A and layer B were the same as those in Example 6.

The solution for layer A was first cast on a glass plate with a doctor blade at a certain thickness and covered by a pan for 4 minutes. The solution for layer B was then cast on top of the layer A and covered by a pan for 4 minutes. Then a third layer using solution A was cast on top of the layer B and covered by a pan for 45 minutes. The cover pan was removed and the tri-layer film was left on the glass plate for an additional 15 minutes. The film was peeled from the glass plate then annealed at 100 °C and 120 °C for 10 minutes, respectively. Films made in this manner were uniaxially or simultaneous biaxially stretched under different stretching conditions. The stretching conditions and optical and film data of these films are listed in Table 7.

Table 7. Optical properties for a tri-layer optical waveplate prepared by co-casting.

| Run | MDxTD | Stretch Temp. (°C) | $R_e$ (nm) | $R_{th}$ (nm) | $A_{Re}$ | $B_{Re}$ | $A_{Rth}$ | $B_{Rth}$ | Film Thickness-(μm) | Haze (%) |
|---|---|---|---|---|---|---|---|---|---|---|
| 40 | 1.00x1.30 | 170 | 90.86 | -251.57 | 0.971 | 1.015 | 0.981 | 1.009 | 80 | 0.33 |
| 41 | 1.00x1.30 | 170 | 85.73 | -244.95 | 0.971 | 1.016 | 0.983 | 1.010 | 78 | 0.35 |
| 42 | 1.00x1.35 | 175 | 114.23 | -276.40 | 0.967 | 1.018 | 0.981 | 1.011 | 88 | 0.36 |
| 43 | 1.00x1.35 | 175 | 100.41 | -249.56 | 0.971 | 1.016 | 0.980 | 1.011 | 78 | 0.32 |

Similar to Example 6, when the two cellulose esters were used to construct a tri-layer optical waveplate, the $R_e$ and $R_{th}$ values of the two cellulose esters were additive, and reversed dispersion and low haze were obtained. Thus, the tri-layer optical waveplate simultaneously provided high optical retardation and a reversed dispersion. By varying the cellulose ester for each layer, layer thickness, and stretching and annealing conditions, it was possible to construct optical waveplates with a range of $R_e$ and $R_{th}$ values, and reversed dispersion.

Example 8 (not according to the invention)

This example shows the optical retardation and dispersion of a bi-layer optical waveplate prepared by solvent coating.

The solutions for layer A and layer B were the same as those of Example 6.

The solution for layer B was first cast on a glass plate with a doctor blade at a certain thickness and covered by a pan for 45 minutes. The cover pan was removed and the film was left on the glass plate for an additional 15 minutes. The solution for layer A was then coated on top of layer B at a thickness much less than layer B. The coated film was then covered by a pan for 20 minutes. The cover pan was removed and the coated film was left on the glass plate for an additional 20 minutes. The film was peeled from the glass plate then annealed at 100°C and 120°C for 10 minutes, respectively. Films made in this manner were uniaxially or simultaneous biaxially stretched under different stretching conditions. The stretching conditions and optical and film data of these films are listed in Table 8.

Table 8. Optical retardation and dispersion of a bi-layer optical waveplate prepared by solvent coating.

| Run | MDxTD | Stretch Temp. (°C) | $R_e$ (nm) | $R_{th}$ (nm) | $A_{Re}$ | $B_{Re}$ | $A_{Rth}$ | $B_{Rth}$ | Film Thickness (μm) | Haze (%) |
|---|---|---|---|---|---|---|---|---|---|---|
| 44 | 1.00x1.30 | 175 | 89.43 | -263.71 | 0.979 | 1.011 | 0.982 | 1.009 | 66 | 0.73 |
| 45 | 1.00x1.40 | 175 | 114.57 | -274.07 | 0.976 | 1.014 | 0.981 | 1.009 | 64 | 1.89 |
| 46 | 1.00x1.30 | 175 | 96.81 | -253.28 | 0.979 | 1.012 | 0.983 | 1.009 | 72 | 0.46 |
| 47 | 1.00x1.35 | 180 | 112.35 | -260.85 | 0.979 | 1.012 | 0.980 | 1.012 | 70 | 0.56 |
| 48 | 1.00x1.40 | 180 | 122.34 | -293.01 | 0.978 | 1.012 | 0.979 | 1.012 | 66 | 0.91 |

Similar to Example 6, when the two cellulose esters were used to construct a bi-layer optical waveplate, the $R_e$ and $R_{th}$ values of the two cellulose esters were additive. In Example 6, the bi-layer optical waveplate was prepared by solvent co-casting while in this example, the bi-layer optical waveplate was prepared by coating dried layer B with the solution of layer A. Comparing the data in Table 8 with those in Table 6, it is evident the optical retardations and dispersions are very similar. Namely, both bi-layer optical waveplates simultaneously provided high optical retardation and a reversed dispersion. Further, the haze in both examples was low. Hence, this example shows that optical waveplates with a reversed dispersion can be prepared by a coating process.

Example 9

This example shows the optical retardation and dispersion of a film prepared by solvent blending and casting.

A single solution comprising two cellulose esters was prepared according to the general solution preparation process. The cellulose esters in the solution were the same as those in Example 6:

| | |
|---|---|
| Total solids | 24 g |
| Cellulose ester A | 2.16 g or 4.32 g of a randomly substituted cellulose acetate propionate ($DS_{Ac}$ = 1.49, $DS_{Pr}$ = 1.44, $DS_{OH}$ = 0.07) |
| Cellulose ester B | 19.44 g or 17.28 g of a randomly substituted cellulose acetate propionate ($DS_{Ac}$ = 0.14, $DS_{Pr}$ = 1.71, $DS_{OH}$ = 1.15) |
| Plasticizer | 2.4 g Triphenyl phosphate |
| Total solvent | 176 g |
| Methylene chloride | 153.12 g |
| Methanol | 22.88 g |

Following the general solvent cast procedures described above, the solution was used to obtain single-layer films. The films were annealed at 100°C and 120°C for 10 minutes, respectively, before they were uniaxially or simultaneous biaxially stretched under different stretching conditions. The stretching conditions and optical and film data of these films are listed in Table 9.

Table 9. Optical retardation and dispersion of film prepared by solvent blending and casting.

| Run | Ester A (wt%) | MDxTD | Stretch Temp. (°C) | $R_e$ (nm) | $R_{th}$ (nm) | $A_{Re}$ | $B_{Re}$ | $A_{Rth}$ | $B_{Rth}$ | Film Thick -ness ($\mu$m) | Haze (%) |
|---|---|---|---|---|---|---|---|---|---|---|---|
| 49 | 10 | 1.00x1.30 | 165 | 88.74 | -277.78 | 0.984 | 1.009 | 1.010 | 0.983 | 60 | 3.78 |
| 50 | | 1.00x1.27 | 165 | 89.63 | -286.97 | 0.983 | 1.009 | 1.013 | 0.981 | 76 | 4.5 |
| 51 | | 1.00x1.27 | 165 | 95.23 | -315.38 | 0.984 | 1.008 | 1.036 | 0.964 | 76 | 5.67 |
| 52 | | 1.00x1.30 | 170 | 83.44 | -242.84 | 0.984 | 1.009 | 1.012 | 0.983 | 58 | 4.52 |
| 53 | 20 | 1.00x1.35 | 165 | 88.46 | -297.08 | 0.977 | 1.010 | 1.108 | 0.909 | 62 | 13.61 |
| 54 | | 1.00x1.40 | 170 | 96.47 | -279.68 | 0.977 | 1.012 | 1.108 | 0.907 | 60 | 13.4 |
| 55 | | 1.00x1.35 | 165 | 88.43 | -296.38 | 0.976 | 1.013 | 1.110 | 0.906 | 60 | 12.81 |

Similar to Examples 6 and 8, the $R_e$ and $R_{th}$ of these single-layer blended films showed an additive effect. However, the film haze was much higher in this example than in Examples 6 and 8. The higher film haze would not be acceptable in LCDs where clarity is important. The higher haze in this example is believed to be a result of the two cellulose esters being incompatible as a blend.

This example also illustrates that it is not necessary to intimately blend the two cellulose esters in order to obtain the $R_e$ and $R_{th}$ additive effect. Discrete layers formed by co-casting or coating processes without specific orientation with respect to each layer can lead to the same $R_e$ and $R_{th}$ additive effect. By having discrete layers, issues such as incompatibility can be avoided.

Example 10 (not according to the invention)

This example shows the optical retardation and dispersion of a tri-layer optical waveplate prepared by solvent co-casting.

A randomly (RDS: $C_6$ = 0.92, $C_3$ = 1.00, $C_2$ = 0.96) substituted cellulose acetate propionate ($DS_{Ac}$ = 1.49, $DS_{Pr}$ = 1.44, $DS_{OH}$ = 0.07) was used to prepare the following solution for layer A for Example 10:

| | |
|---|---|
| Total solids | 24 g |
| Cellulose ester | 21.6 g |
| Plasticizer | 2.4 g Xylitol Pentaacetate |
| Total solvent | 276 g |
| Methylene chloride | 240.12 g |
| Methanol | 35.88 g |

A randomly (RDS: $C_6$ = 0.55, $C_3$ = 0.69, $C_2$ = 0.68) substituted cellulose acetate propionate ($DS_{Ac}$ = 1.41, $DS_{Pr}$ = 0.61, $DS_{OH}$ = 0.98) was used to prepare the following solution for layer B for Example 10:

| | |
|---|---|
| Total solids | 24 g |
| Cellulose ester | 21.6 g |
| Plasticizer | 2.4 g Triphenyl phosphate |
| Total solvent | 176 g |
| Methylene chloride | 153.12 g |
| Methanol | 22.88 g |

Following the general procedure for solution preparation, solutions for layers A and B were independently prepared. The solution for layer A was first cast on a glass plate with a doctor blade at a certain thickness and covered by a pan for 4 minutes. The solution for layer B was then cast on top of the layer A and covered by a pan for 4 minutes. Then a third layer using solution A was cast on top of the layer B and covered by a pan for 45 minutes. The cover pan was removed and the tri-layer film was left on the glass plate for an additional 15 minutes. The film was peeled from the glass plate then annealed at 100°C and 120°C for 10 minutes, respectively. Films made in this manner were uniaxially or simultaneous biaxially stretched under different stretching conditions. The stretching conditions and optical and film data of these films are listed in Table 10.

Table 10. Optical retardation and dispersion of a tri-layer optical waveplate prepared by solvent co-casting.

| **Run** | **MDxTD** | **Stretch Temp. (°C)** | **$R_e$ (nm)** | **$R_{th}$ (nm)** | **$A_{Re}$** | **$B_{Re}$** | **$A_{Rth}$** | **$B_{Rth}$** | **Film Thickness (μm)** |
|---|---|---|---|---|---|---|---|---|---|
| 56 | 1.00x1.30 | 180 | 64.19 | -85.87 | 0.945 | 1.031 | 0.927 | 1.059 | 126 |
| 57 | 1.00x1.40 | 180 | 116.18 | -227.82 | 0.946 | 1.030 | 0.956 | 1.030 | 128 |
| 58 | 1.00x1.35 | 180 | 83.61 | -183.41 | 0.943 | 1.032 | 0.953 | 1.034 | 102 |

The cellulose ester used in layer B in this example was similar to the cellulose ester of Example 1 in that as a single-layer film the cellulose ester exhibited large positive values for $R_e$ and large negative values for $R_{th}$, but the film exhibited a flat dispersion. As shown in Example 2, as a single-layer film, the cellulose ester used to make layer A

exhibited negative $R_e$ values and positive $R_{th}$ values, and the film exhibited a normal dispersion. Similar to Example 7, when the two cellulose esters here were used to construct a tri-layer optical waveplate, the $R_e$ and $R_{th}$ values of the two cellulose esters were additive. In addition, the tri-layer optical waveplate simultaneously provided high optical retardation and a reversed dispersion.

Comparing the data in Table 10 to those in Table 7, it can be seen that the values for $A_{Re}$ and $B_{Re}$ as well as for $A_{Rth}$ and $B_{Rth}$ in this example were closer to those of an ideal achromatic waveplate. This example illustrates that the cellulose ester in each layer is a factor in constructing optical waveplates.

Example 11 (not according to the invention)

This example shows the optical retardation and dispersion of a tri-layer optical waveplate prepared by solvent co-casting.

A regioselectively (RDS: $C_6$ = 1.00, $C_3$ = 0.68, $C_2$ = 0.84) substituted cellulose benzoate propionate in which the benzoate was primarily located on $C_2$ and $C_3$ ($DS_{Bz}$ = 0.29, $DS_{Pr}$ = 2.26, $DS_{OH}$ = 0.45) (which was prepared according to U.S. Patent Appl. No. 12/539,817) was used to prepare the following solution for layer A for Example 11:

| | |
|---|---|
| Total solids | 24 g |
| Cellulose ester | 21.6 g |
| Plasticizer | 2.4 g Triphenyl phosphate |
| Total solvent | 276 g |
| Methylene chloride | 240.12 g |
| Methanol | 35.88 g |

A randomly (RDS: $C_6$ = 0.55, $C_3$ = 0.69, $C_2$ = 0.68) substituted cellulose acetate propionate ($DS_{Ac}$ = 1.41, $DS_{Pr}$ = 0.61, $DS_{OH}$ = 0.98) was used to prepare the following solution for layer B for Example 11:

| | |
|---|---|
| Total solids | 24 g |
| Cellulose ester | 21.6 g |
| Plasticizer | 2.4 g Triphenyl phosphate |
| Total solvent | 176 g |
| Methylene chloride | 153.12 g |
| Methanol | 22.88 g |

Following the general procedure for solution preparation, solutions for layers A and B were independently prepared. The solution for layer A was first cast on a glass plate with a doctor blade at a certain thickness and covered by a pan for 4 minutes. The solution for layer B was then cast on top of the layer A and covered by a pan for 4 minutes. Then a third layer using solution A was cast on top of the layer B and covered by a pan for 45 minutes. The cover pan was removed and the tri-layer film was left on the glass plate for an additional 15 minutes. The film was peeled from the glass plate then annealed at 100°C and 120°C for 10 minutes, respectively. Films made in this manner were uniaxially or simultaneous biaxially stretched under different stretching conditions. The stretching conditions and optical and film data of these films are listed in Table 11.

Table 11. Optical retardation and dispersion of a tri-layer optical waveplate prepared by solvent co-casting.

| Run | MDxTD | Stretch Temp. (°C) | $R_e$ (nm) | $R_{th}$ (nm) | $A_{Re}$ | $B_{Re}$ | $AR_{th}$ | $B_{Rth}$ | Film Thickness (μm) |
|---|---|---|---|---|---|---|---|---|---|
| 59 | 1.00x1.25 | 180 | 70.72 | -309.59 | 0.936 | 1.031 | 0.971 | 1.017 | 102 |
| 60 | 1.00x1.30 | 180 | 92.13 | -314.29 | 0.930 | 1.033 | 0.971 | 1.018 | 104 |
| 61 | 1.00x1.30 | 180 | 87.60 | -292.64 | 0.933 | 1.035 | 0.971 | 1.019 | 98 |
| 62 | 1.00x1.35 | 180 | 98.41 | -297.14 | 0.925 | 1.038 | 0.967 | 1.021 | 102 |

The cellulose ester used in layer B of this example was the same cellulose ester used in Example 10, and it is similar to the cellulose ester of Example 1 in that as a single-layer film, the cellulose ester exhibited large positive values

for $R_e$ and large negative values for $R_{th}$, but the film exhibited a flat dispersion. As shown in Example 3, as a single-layer film, the cellulose ester used to make layer A exhibited negative $R_e$ values and positive or negative $R_{th}$ values depending upon stretching conditions and the film exhibited a normal dispersion. Similar to Examples 7 and 10, when the two cellulose esters here were used to construct a tri-layer optical waveplate, the $R_e$ and $R_{th}$ values of the two cellulose esters were additive.

Comparing the data in Table 11 with those in Table 10, it can be seen that larger $R_{th}$ values were obtained in this example. The values for $A_{Re}$ and $B_{Re}$ as well as for $A_{Rth}$ and $B_{Rth}$ in this example indicate that the optical waveplate exhibited a reversed dispersion with a slope different from that found in Example 10. This example illustrates that the cellulose ester of each layer is a factor in constructing optical waveplates.

Example 12 (not according to the invention)

This example shows the optical retardation and dispersion of a tri-layer optical waveplate prepared by solvent co-casting.

A randomly (RDS: $C_6$ = 0.92, $C_3$ = 1.00, $C_2$ = 0.96) substituted cellulose acetate propionate ($DS_{Ac}$ = 1.49, $DS_{Pr}$ = 1.44, $DS_{OH}$ = 0.07) was used to prepare the following solution for layer A for Example 12:

| | |
|---|---|
| Total solids | 24 g |
| Cellulose ester | 21.6 g |
| Plasticizer | 2.4 g Xylitol Pentaacetate |
| Total solvent | 276 g |
| Methylene chloride | 240.12 g |
| Methanol | 35.88 g |

A randomly (RDS: $C_6$ = 0.61, $C_3$ = 0.72, $C_2$ = 0.74) substituted cellulose acetate propionate ($DS_{Ac}$ = 1.24, $DS_{Pr}$ = 0.95, $DS_{OH}$ = 0.81) was used to prepare the following solution for layer B for Example 12:

| | |
|---|---|
| Total solids | 24 g |
| Cellulose ester | 21.6 g |
| Plasticizer | 2.4 g Triphenyl phosphate |
| Total solvent | 176 g |
| Methylene chloride | 153.12 g |
| Methanol | 22.88 g |

Following the general procedure for solution preparation, solutions for layers A and B were independently prepared. The solution for layer A was first cast on a glass plate with a doctor blade at a certain thickness and covered by a pan for 4 minutes. The solution for layer B was then cast on top of the layer A and covered by a pan for 4 minutes. Then a third layer using solution A was cast on top of the layer B and covered by a pan for 45 minutes. The cover pan was removed and the tri-layer film was left on the glass plate for an additional 15 minutes. The film was peeled from the glass plate then annealed at 100°C and 120°C for 10 minutes, respectively. Films made in this manner were uniaxially or simultaneous biaxially stretched under different stretching conditions. The stretching conditions and optical and film data of these films are listed in Table 12.

Table 12. Optical retardation and dispersion of a tri-layer optical waveplate prepared by solvent co-casting.

| Run | MDxTD | Stretch Temp. (°C) | $R_e$ (nm) | $R_{th}$ (nm) | $A_{Re}$ | $B_{Re}$ | $A_{Rth}$ | $B_{Rth}$ | Film Thickness (μm) |
|---|---|---|---|---|---|---|---|---|---|
| 63 | 1.00x1.40 | 177 | 65.90 | -144.63 | 0.936 | 1.037 | 0.943 | 1.043 | 102 |
| 64 | 1.00x1.50 | 177 | 82.34 | -144.90 | 0.930 | 1.037 | 0.940 | 1.044 | 94 |
| 65 | 1.00x1.40 | 180 | 62.98 | -125.11 | 0.939 | 1.033 | 0.938 | 1.050 | 98 |
| 66 | 1.00x1.50 | 180 | 71.68 | -129.04 | 0.941 | 1.034 | 0.938 | 1.047 | 94 |

The cellulose ester used in layer B of this example was similar to the cellulose ester of Example 1 in that as a

single-layer film, the cellulose ester exhibited large positive values for $R_e$ and large negative values for $R_{th}$, but the film exhibited a flat dispersion. As shown in Example 2, as a single-layer film, the cellulose ester used to make layer A exhibited negative $R_e$ values and positive $R_{th}$ values, and the film exhibited a normal dispersion. Layer A in this example was the same as that used in Example 10. Similar to Example 10, when the cellulose esters here were used to construct a tri-layer optical waveplate, the $R_e$ and $R_{th}$ values of the two cellulose esters were additive.

In this example, the tri-layer optical waveplate simultaneously provided high optical retardation and a reversed dispersion. Comparing the data in Table 12 with those in Table 10, it can be seen that the values for $A_{Re}$ and $B_{Re}$ in this example indicate that the dispersion was more reversed relative to Example 10. This example illustrates that the cellulose ester for each layer is a factor in constructing optical waveplates with desired optical retardation and a reversed dispersion.

Example 13 (not according to the invention)

This example shows the optical retardation and dispersion of a tri-layer optical waveplate prepared by solvent co-casting.

A regioselectively (RDS: $C_6$ = 1.00, $C_3$ = 0.68, $C_2$ = 0.84) substituted cellulose benzoate propionate in which the benzoate was primarily located on $C_2$ and $C_3$ ($DS_{Bz}$ = 0.29, $DS_{Pr}$ = 2.26, $DS_{OH}$ = 0.45), prepared according to U.S. Patent Appl. No. 12/539,817, was used to prepare the following solution for layer A for Example 13:

| | |
|---|---|
| Total solids | 24 g |
| Cellulose ester | 21.6 g |
| Plasticizer | 2.4 g Triphenyl phosphate |
| Total solvent | 276 g |
| Methylene chloride | 240.12 g |
| Methanol | 35.88 g |

A randomly (RDS: $C_6$ = 0.61, $C_3$ = 0.72, $C_2$ = 0.74) substituted cellulose acetate propionate ($DS_{Ac}$ = 1.24, $DS_{Pr}$ = 0.95, $DS_{OH}$ = 0.81) was used to prepare the following solution for layer B for Example 13:

| | |
|---|---|
| Total solids | 24 g |
| Cellulose ester | 21.6 g |
| Plasticizer | 2.4 g Triphenyl phosphate |
| Total solvent | 176 g |
| Methylene chloride | 153.12 g |
| Methanol | 22.88 g |

Following the general procedure for solution preparation, solutions for layers A and B were independently prepared. The solution for layer A was first cast on a glass plate with a doctor blade at a certain thickness and covered by a pan for 4 minutes. The solution for layer B was then cast on top of the layer A and covered by a pan for 4 minutes. Then a third layer using solution A was cast on top of the layer B and covered by a pan for 45 minutes. The cover pan was removed and the tri-layer film was left on the glass plate for an additional 15 minutes. The film was peeled from the glass plate then annealed at 100°C and 120°C for 10 minutes, respectively. Films made in this manner were uniaxially or simultaneous biaxially stretched under different stretching conditions. The stretching conditions and optical and film data of these films are listed in Table 13.

Table 13. Optical retardation and dispersion of a tri-layer optical waveplate prepared by solvent co-casting.

| Run | MDxTD | Stretch Temp. (°C) | $R_e$ (nm) | $R_{th}$ (nm) | $A_{Re}$ | $B_{Re}$ | $A_{Rth}$ | $B_{Rth}$ | Film Thickness (μm) |
|---|---|---|---|---|---|---|---|---|---|
| 67 | 1.00x1.40 | 177 | 64.07 | -242.78 | 0.865 | 1.070 | 0.958 | 1.030 | 96 |
| 68 | 1.00x1.40 | 180 | 70.28 | -261.71 | 0.898 | 1.052 | 0.956 | 1.028 | 100 |
| 69 | 1.00x1.45 | 180 | 75.19 | -242.92 | 0.872 | 1.066 | 0.955 | 1.032 | 100 |

The cellulose ester used in layer B of this example was the same cellulose ester used in Example 12 and it

was similar to the cellulose ester of Example 1 in that as a single-layer film, the cellulose ester exhibited large positive values for $R_e$ and large negative values for $R_{th}$, but the film exhibited a flat dispersion. As shown in Example 3, as a single-layer film, the cellulose ester used to make layer A exhibited negative $R_e$ values and positive or negative $R_{th}$ values depending upon stretching conditions and the film exhibited a normal dispersion. Similar to Example 12, when the cellulose esters here were used to construct a tri-layer optical waveplate, the $R_e$ and $R_{th}$ values of the two cellulose esters were additive.

Comparing the data in Table 13 with those in Table 12, it can be seen that larger absolute $R_{th}$ values were obtained in this example. The values for $A_{Re}$ and $B_{Re}$ in this example indicate that the optical waveplate exhibited a reversed dispersion that is very close to that of an ideal achromatic waveplate ($A_{Re}$ = $A_{Rth}$ = 0.818 and $B_{Re}$ = $B_{Rth}$ = 1.182). This example illustrates that the cellulose ester of each layer is a factor in constructing optical waveplates. In this case, substitution of the regioselective substituted cellulose benzoate propionate in layer A for the randomly substituted CAP of Example 12 significantly altered the $R_{th}$, $A_{Re}$, and $B_{Re}$ values.

The invention has been described in detail with particular reference to preferred embodiments thereof, but it will be understood that variations and modifications can be effected within the spirit and scope of the invention.

## Claims

1. A single-layer film comprising:

   a layer (A) comprising cellulose ester having a degree of substitution of hydroxyl groups ($DS_{OH}$) of 0 to 0.5, which, after stretching in at least one direction, has an $R_e(550)$ of -80 to -10 nm, an $R_{th}(550)$ of 0 to 100 nm, an $A_{Re}$ and $A_{Rth}$ of 1.0 to 1.6, and a $B_{Re}$ and $B_{Rth}$ of 1.0 to 0.6, measured at a film thickness of 30 to 120 μm, or which, after stretching in at least one direction, has an $R_e(550)$ of 10 to 60 nm, an $R_{th}(550)$ of 0 to -60 nm, an $A_{Re}$ and $A_{Rth}$ of 0.5 to 1.0, and a $B_{Re}$ and $B_{Rth}$ of 1.0 to 1.3, measured at a film thickness of 30 to 120 μm, or which, after stretching in at least one direction, has an $R_e(550)$ of -60 to -20 nm, an $R_{th}(550)$ of 0 to 60 nm, an $A_{Re}$ and $A_{Rth}$ of 1.2 to 1.6, and a $B_{Re}$ and $B_{Rth}$ of 0.5 to 0.8, measured at a film thickness of 30 to 120 μm, or which, after stretching in at least one direction, has an $R_e(550)$ of 10 to 40 nm, an $R_{th}(550)$ of 0 to -40 nm, an $A_{Re}$ and $A_{Rth}$ of 0.5 to 0.8, and a $B_{Re}$ and $B_{Rth}$ of 1.1 to 1.3, measured at a film thickness of 30 to 120 μm, or which, after stretching in at least one direction, has an $R_e(550)$ of -50 to -30 nm, an $R_{th}(550)$ of 0 to 40 nm, an $A_{Re}$ and $A_{Rth}$ of 1.4 to 1.6, and a $B_{Re}$ and $B_{Rth}$ of 0.5 to 0.7, measured at a film thickness of 30 to 120 μm, or which, after stretching in at least one direction, has an $R_e(550)$ of 15 to 30 nm, an $R_{th}(550)$ of 0 to -30 nm, an $A_{Re}$ and $A_{Rth}$ of 0.5 to 0.7, and a $B_{Re}$ and $B_{Rth}$ of 1.2 to 1.3, measured at a film thickness of 30 to 120 μm.

2. The single-layer film according to claim 1, wherein the cellulose ester in layer (A) is randomly substituted or regioselectively substituted.

3. The single-layer film according to claim 2, wherein the cellulose ester is a randomly substituted cellulose acetate propionate.

4. The single-layer film according to claim 2, wherein the cellulose ester is a regioselectively substituted cellulose benzoate propionate.

5. A single-layer film comprising:

   a layer (A) comprising cellulose ester having a degree of substitution of hydroxyl groups ($DS_{OH}$) of 0 to 0.5, wherein the cellulose ester is a randomly substituted cellulose acetate propionate, wherein the randomly substituted cellulose acetate propionate has a $DS_{Ac}$ of 1.49, a $DS_{Pr}$ of 1.44 and a $DS_{OH}$ of 0.07, or
   wherein the randomly substituted cellulose acetate propionate has a $DS_{Ac}$ of 0.79, a $DS_{Pr}$ of 2.00 and a $DS_{OH}$ of 0.21, or
   wherein the randomly substituted cellulose acetate propionate has a $DS_{Ac}$ of 0.04, a $DS_{Pr}$ of 2.69 and a $DS_{OH}$ of 0.27.

6. A single-layer film comprising:

   a layer (A) comprising cellulose ester having a degree of substitution of hydroxyl groups ($DS_{OH}$) of 0 to 0.5, wherein the cellulose ester is a regioselectively substituted cellulose benzoate propionate, wherein the regioselectively substituted cellulose benzoate propionate has a $DS_{BZ}$ of 0.29, a $DS_{Pr}$ of 2.26 and a $DS_{OH}$ of 0.45,

and a ring RDS of $C_6$ = 1.00, $C_3$ = 0.68, $C_2$ = 0.84.

7. A single-layer film comprising:

a layer (B) comprising cellulose ester having a $DS_{OH}$ of 0.5 to 1.3,
wherein the film has a reversed optical dispersion, which, after stretching in at least one direction, has an $R_e(550)$ of 10 to 350 nm, an $R_{th}(550)$ of -100 to -400 nm, an $A_{Re}$ and $A_{Rth}$ of 0.97 to 1.1, and a $B_{Re}$ and $B_{Rth}$ of 0.97 to 1.05, measured at a film thickness of 30 to 120 μm, or
which, after stretching in at least one direction, has an $R_e(550)$ of 45 to 300 nm, an $R_{th}(550)$ of -150 to -350 nm, an $A_{Re}$ and $A_{Rth}$ of 0.97 to 1.0, and a $B_{Re}$ and $B_{Rth}$ of 1.0 to 1.05, measured at a film thickness of 30 to 120 μm, or
which, after stretching in at least one direction, has an $R_e(550)$ of 55 to 280 nm, an $R_{th}(550)$ of -180 to -300 nm, an $A_{Re}$ and $A_{Rth}$ of 0.97 to 0.99, and a $B_{Re}$ and $B_{Rth}$ of 1.0 to 1.06, measured at a film thickness of 30 to 120 μm.

8. The single-layer film according to claim 7, wherein the cellulose ester in layer (B) is randomly substituted or regioselectively substituted.

9. The single-layer film according to claim 8, wherein the cellulose ester is a randomly substituted cellulose acetate propionate.

10. A single-layer film comprising:

a layer (B) comprising cellulose ester having a $DS_{OH}$ of 0.5 to 1.3,
wherein the film has a reversed optical dispersion, wherein the cellulose ester is a randomly-substituted cellulose acetate propionate, wherein the randomly substituted cellulose acetate propionate has a $DS_{Ac}$ of 0.14, a $DS_{Pr}$ of 1.71 and a $DS_{OH}$ of 1.15.

11. The single-layer film according to any one of claims 1 to 10, which is made by solvent casting.

12. The single-layer film according to any one of claims 1 to 11, which has been stretched in at least one direction.

13. An optical waveplate for a liquid crystal display, which comprises the single-layer film according to any one of claims 1 to 12.

14. A liquid crystal display which comprises the optical waveplate according to claim 13.

## Patentansprüche

1. Einlagiger Film umfassend:

eine Lage (A) umfassend Celluloseester mit einem Substitutionsgrad an Hydroxylgruppen ($DS_{OH}$) von 0 bis 0,5, die nach dem Verstrecken in mindestens eine Richtung ein $R_e(550)$ von -80 bis -10 nm aufweist, ein $R_{th}(550)$ von 0 bis 100 nm, ein $A_{Re}$ und $A_{Rth}$ von 1,0 bis 1,6 und ein $B_{Re}$ und $B_{Rth}$ von 1,0 bis 0,6, gemessen bei einer Filmdicke von 30 bis 120 μm, oder
die nach dem Verstrecken in mindestens eine Richtung ein $R_e(550)$ von 10 bis 60 nm aufweist, ein $R_{th}(550)$ von 0 bis -60 nm, ein $A_{Re}$ und $A_{Rth}$ von 0,5 bis 1,0 und ein $B_{Re}$ und $B_{Rth}$ von 1,0 bis 1,3, gemessen bei einer Filmdicke von 30 bis 120 μm, oder
die nach dem Verstrecken in mindestens eine Richtung ein $R_e(550)$ von -60 bis -20 nm aufweist, ein $R_{th}(550)$ von 0 bis 60 nm, ein $A_{Re}$ und $A_{Rth}$ von 1,2 bis 1,6 und ein $B_{Re}$ und $B_{Rth}$ von 0,5 bis 0,8, gemessen bei einer Filmdicke von 30 bis 120 μm, oder
die nach dem Verstrecken in mindestens eine Richtung ein $R_e(550)$ von 10 bis 40 nm aufweist, ein $R_{th}(550)$ von 0 bis -40 nm, ein $A_{Re}$ und $A_{Rth}$ von 0,5 bis 0,8 und ein $B_{Re}$ und $B_{Rth}$ von 1,1 bis 1,3, gemessen bei einer Filmdicke von 30 bis 120 μm, oder
die nach dem Verstrecken in mindestens eine Richtung ein $R_e(550)$ von -50 bis -30 nm aufweist, ein $R_{th}(550)$ von 0 bis 40 nm, ein $A_{Re}$ und $A_{Rth}$ von 1,4 bis 1,6 und ein $B_{Re}$ und $B_{Rth}$ von 0,5 bis 0,7, gemessen bei einer Filmdicke von 30 bis 120 μm, oder
die nach dem Verstrecken in mindestens eine Richtung ein $R_e(550)$ von 15 bis 30 nm aufweist, ein $R_{th}(550)$ von 0 bis -30 nm, ein $A_{Re}$ und $A_{Rth}$ von 0,5 bis 0,7 und ein $B_{Re}$ und $B_{Rth}$ von 1,2 bis 1,3, gemessen bei einer

Filmdicke von 30 bis 120 μm.

2. Einlagiger Film nach Anspruch 1, wobei der Celluloseester in der Lage (A) regellos substituiert oder regioselektiv substituiert ist.

3. Einlagiger Film nach Anspruch 2, wobei der Celluloseester ein regellos substituiertes Celluloseacetatpropionat ist.

4. Einlagiger Film nach Anspruch 2, wobei der Celluloseester ein regioselektiv substituiertes Cellulosebenzoatpropionat ist.

5. Einlagiger Film umfassend:

eine Lage (A) umfassend Celluloseester mit einem Substitutionsgrad an Hydroxylgruppen ($DS_{OH}$) von 0 bis 0,5, wobei der Celluloseester ein regellos substituiertes Celluloseacetatpropionat ist, wobei das regellos substituierte Celluloseacetatpropionat ein $DS_{AC}$ von 1,49 aufweist, ein $DS_{PR}$ von 1,44 und ein $DS_{OH}$ von 0,07, oder wobei das regellos substituierte Celluloseacetatpropionat ein $DS_{AC}$ von 0,79 aufweist, ein $DS_{PR}$ von 2,00 und ein $DS_{OH}$ von 0,21, oder
wobei das regellos substituierte Celluloseacetatpropionat ein $DS_{AC}$ von 0,04 aufweist, ein $DS_{PR}$ von 2,69 und ein $DS_{OH}$ von 0,27.

6. Einlagiger Film umfassend:

eine Lage (A) umfassend Celluloseester mit einem Substitutionsgrad an Hydroxylgruppen ($DS_{OH}$) von 0 bis 0,5, wobei der Celluloseester ein regioselektiv substituiertes Cellulosebenzoatpropionat ist, wobei das regioselektiv substituierte Cellulosebenzoatpropionat ein $DS_{BZ}$ von 0,29 aufweist, ein $DS_{PR}$ von 2,26 und ein $DS_{OH}$ von 0,45 und einen Ring-RDS von $C_6$ = 1,00, $C_3$ = 0,68, $C_2$ = 0,84.

7. Einlagiger Film umfassend:

eine Lage (B) umfassend einen Celluloseester mit einem $DS_{OH}$ von 0,5 bis 1,3,
wobei der Film eine umgekehrte optische Dispersion aufweist, der nach dem Verstrecken in mindestens eine Richtung ein $R_e(550)$ von 10 bis 350 nm aufweist, ein $R_{th}(550)$ von -100 bis -400 nm, ein $A_{Re}$ und $A_{Rth}$ von 0,97 bis 1,1 und ein $B_{Re}$ und $B_{Rth}$ von 0,97 bis 1,05, gemessen bei einer Filmdicke von 30 bis 120 μm, oder
der nach dem Verstrecken in mindestens eine Richtung ein $R_e(550)$ von 45 bis 300 nm aufweist, ein $R_{th}(550)$ von -150 bis -350 nm, ein $A_{Re}$ und $A_{Rth}$ von 0,97 bis 1,0 und ein $B_{Re}$ und $B_{Rth}$ von 1,0 bis 1,05, gemessen bei einer Filmdicke von 30 bis 120 μm, oder
der nach dem Verstrecken in mindestens eine Richtung ein $R_e(550)$ von 55 bis 280 nm aufweist, ein $R_{th}(550)$ von -180 bis -300 nm, ein $A_{Re}$ und $A_{Rth}$ von 0,97 bis 0,99 und ein $B_{Re}$ und $B_{Rth}$ von 1,0 bis 1,06, gemessen bei einer Filmdicke von 30 bis 120 μm.

8. Einlagiger Film nach Anspruch 7, wobei der Celluloseester in der Lage (B) regellos substituiert oder regioselektiv substituiert ist.

9. Einlagiger Film nach nach Anspruch 8, wobei der Celluloseester ein regellos substituiertes Celluloseacetatpropionat ist.

10. Einlagiger Film umfassend:

eine Lage (B) umfassend einen Celluloseester mit einem $DS_{OH}$ von 0,5 bis 1,3,
wobei der Film hat eine umgekehrte optische Dispersion aufweist, wobei der Celluloseester ein regellos substituiertes Celluloseacetatpropionat ist, wobei das regellos substituierte Celluloseacetatpropionat ein $DS_{AC}$ von 0,14 aufweist, ein $DS_{PR}$ von 1,71 und ein $DS_{OH}$ von 1,15.

11. Einlagiger Film nach einem der Ansprüche 1 bis 10, der durch Gießen mit einem Lösungsmittel hergestellt ist.

12. Einlagiger Film nach einem der Ansprüche 1 bis 11, der in mindestens eine Richtung verstreckt ist.

13. Optische Wellenplatte für eine Flüssigkristallanzeige, die den einlagigen Film nach einem der Ansprüche 1 bis 12

umfasst.

**14.** Flüssigkristallanzeige, die die optische Wellenplatte nach Anspruch 13 umfasst.

## Revendications

**1.** Film monocouche comprenant :

une couche (A) comprenant un ester cellulosique ayant un degré de substitution de groupes hydroxyle ($DS_{OH}$) de 0 à 0,5, qui, après étirage dans au moins une direction, a un $R_e(550)$ de -80 à -10 nm, un $R_{th}(550)$ de 0 à 100 nm, un $A_{Re}$ et $A_{Rth}$ de 1,0 à 1,6, et un $B_{Re}$ et $B_{Rth}$ de 1,0 à 0,6, mesurés à une épaisseur de film de 30 à 120 μm, ou
qui, après étirage dans au moins une direction, a un $R_e(550)$ de 10 à 60 nm, un $R_{th}(550)$ de 0 à -60 nm, un $A_{Re}$ et $A_{Rth}$ de 0,5 à 1,0, et un $B_{Re}$ et $B_{Rth}$ de 1,0 à 1,3, mesurés à une épaisseur de film de 30 à 120 μm, ou
qui, après étirage dans au moins une direction, a un $R_e(550)$ de -60 à -20 nm, un $R_{th}(550)$ de 0 à 60 nm, un $A_{Re}$ et $A_{Rth}$ de 1,2 à 1,6, et un $B_{Re}$ et $B_{Rth}$ de 0,5 à 0,8, mesurés à une épaisseur de film de 30 à 120 μm, ou
qui, après étirage dans au moins une direction, a un $R_e(550)$ de 10 à 40 nm, un $R_{th}(550)$ de 0 à -40 nm, un $A_{Re}$ et $A_{Rth}$ de 0,5 à 0,8, et un $B_{Re}$ et $B_{Rth}$ de 1,1 à 1,3, mesurés à une épaisseur de film de 30 à 120 μm, ou
qui, après étirage dans au moins une direction, a un $R_e(550)$ de -50 à -30 nm, un $R_{th}(550)$ de 0 à 40 nm, un $A_{Re}$ et $A_{Rth}$ de 1,4 à 1,6, et un $B_{Re}$ et $B_{Rth}$ de 0,5 à 0,7, mesurés à une épaisseur de film de 30 à 120 μm, ou
qui, après étirage dans au moins une direction, a un $R_e(550)$ de 15 à 30 nm, un $R_{th}(550)$ de 0 à -30 nm, un $A_{Re}$ et $A_{Rth}$ de 0,5 à 0,7, et un $B_{Re}$ et $B_{Rth}$ de 1,2 à 1,3, mesurés à une épaisseur de film de 30 à 120 μm.

**2.** Film monocouche selon la revendication 1, où l'ester cellulosique dans la couche (A) est substitué de manière aléatoire ou substitué de manière régiosélective.

**3.** Film monocouche selon la revendication 2, où l'ester cellulosique est un acétate propionate cellulosique substitué de manière aléatoire.

**4.** Film monocouche selon la revendication 2, où l'ester cellulosique est un benzoate propionate cellulosique substitué de manière régiosélective.

**5.** Film monocouche comprenant :

une couche (A) comprenant un ester cellulosique ayant un degré de substitution de groupes hydroxyle ($DS_{OH}$) de 0 à 0,5, où l'ester cellulosique est un acétate propionate cellulosique substitué de manière aléatoire, où l'acétate propionate cellulosique substitué de manière aléatoire a un $DS_{AC}$ de 1,49, un $DS_{Pr}$ de 1,44 et un $DS_{OH}$ de 0,07, ou
où l'acétate propionate cellulosique substitué de manière aléatoire a un $DS_{AC}$ de 0,79, un $DS_{Pr}$ de 2,00 et un $DS_{OH}$ de 0,21, ou
où l'acétate propionate cellulosique substitué de manière aléatoire a un $DS_{AC}$ de 0,04, un $DS_{Pr}$ de 2,69 et un $DS_{OH}$ de 0,27.

**6.** Film monocouche comprenant :

une couche (A) comprenant un ester cellulosique ayant un degré de substitution de groupes hydroxyle ($DS_{OH}$) de 0 à 0,5, où l'ester cellulosique est un benzoate propionate cellulosique substitué de manière régiosélective, où le benzoate propionate cellulosique substitué de manière régiosélective a un $DS_{BZ}$ de 0,29, un $DS_{Pr}$ de 2,26 et un $DS_{OH}$ de 0,45, et un noyau RDS de $C_6$ = 1,00, $C_3$ = 0,68, $C_2$ = 0,84.

**7.** Film monocouche comprenant :

une couche (B) comprenant un ester cellulosique ayant un $DS_{OH}$ de 0,5 à 1,3,
où le film a une dispersion optique inversée, qui, après étirage dans au moins une direction, a un $R_e(550)$ de 10 à 350 nm, un $R_{th}(550)$ de -100 à -400 nm, un $A_{Re}$ et $A_{Rth}$ de 0,97 à 1,1, et un $B_{Re}$ et $B_{Rth}$ de 0,97 à 1,05, mesurés à une épaisseur de film de 30 à 120 μm, ou
qui, après étirage dans au moins une direction, a un $R_e(550)$ de 45 à 300 nm, un $R_{th}(550)$ de -150 à -350 nm,

un $A_{Re}$ et $A_{Rth}$ de 0,97 à 1,0, et un $B_{Re}$ et $B_{Rth}$ de 1,0 à 1,05, mesurés à une épaisseur de film de 30 à 120 µm, ou qui, après étirage dans au moins une direction, a un $R_e(550)$ de 55 à 280 nm, un $R_{th}(550)$ de -180 à -300 nm, un $A_{Re}$ et $A_{Rth}$ de 0,97 à 0,99, et un $B_{Re}$ et $B_{Rth}$ de 1,0 à 1,06, mesurés à une épaisseur de film de 30 à 120 µm.

**8.** Film monocouche selon la revendication 7, où l'ester cellulosique dans la couche (B) est substitué de manière aléatoire ou substitué de manière régiosélective.

**9.** Film monocouche selon la revendication 8, où l'ester cellulosique est un acétate propionate cellulosique substitué de manière aléatoire.

**10.** Film monocouche comprenant :

une couche (B) comprenant un ester cellulosique ayant un $DS_{OH}$ de 0,5 à 1,3,
où le film présente une dispersion optique inversée, où l'ester cellulosique est un acétate propionate cellulosique substitué de manière aléatoire, où l'acétate propionate cellulosique substitué de manière aléatoire a un $DS_{AC}$ de 0,14, un $DS_{Pr}$ de 1,71 et un $DS_{OH}$ de 1,15.

**11.** Film monocouche selon l'une quelconque des revendications 1 à 10, qui est produit par coulée en solvant.

**12.** Film monocouche selon l'une quelconque des revendications 1 à 11, qui a été étiré dans au moins une direction.

**13.** Plaque d'ondes optiques pour un dispositif d'affichage à cristaux liquides, qui comprend le film monocouche selon l'une quelconque des revendications 1 à 12.

**14.** Dispositif d'affichage à cristaux liquides qui comprend la plaque d'ondes optiques selon la revendication 13.

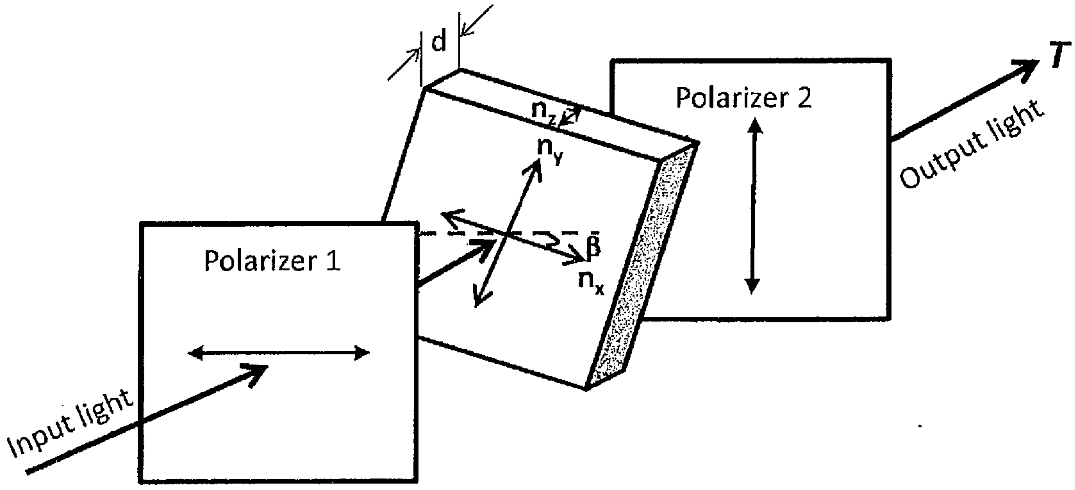
d
$n_z$
$n_y$
β
$n_x$
Polarizer 1
Polarizer 2
Input light
Output light
T

Fig. 1

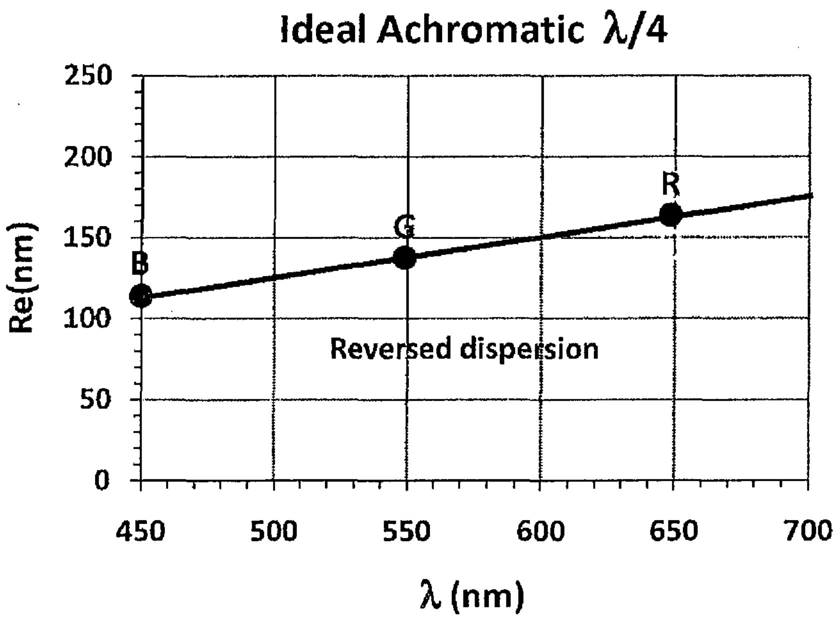
Ideal Achromatic λ/4
250
200
150
100
50
0
Re(nm)
B
G
R
Reversed dispersion
450
500
550
600
650
700
λ (nm)

Fig. 2

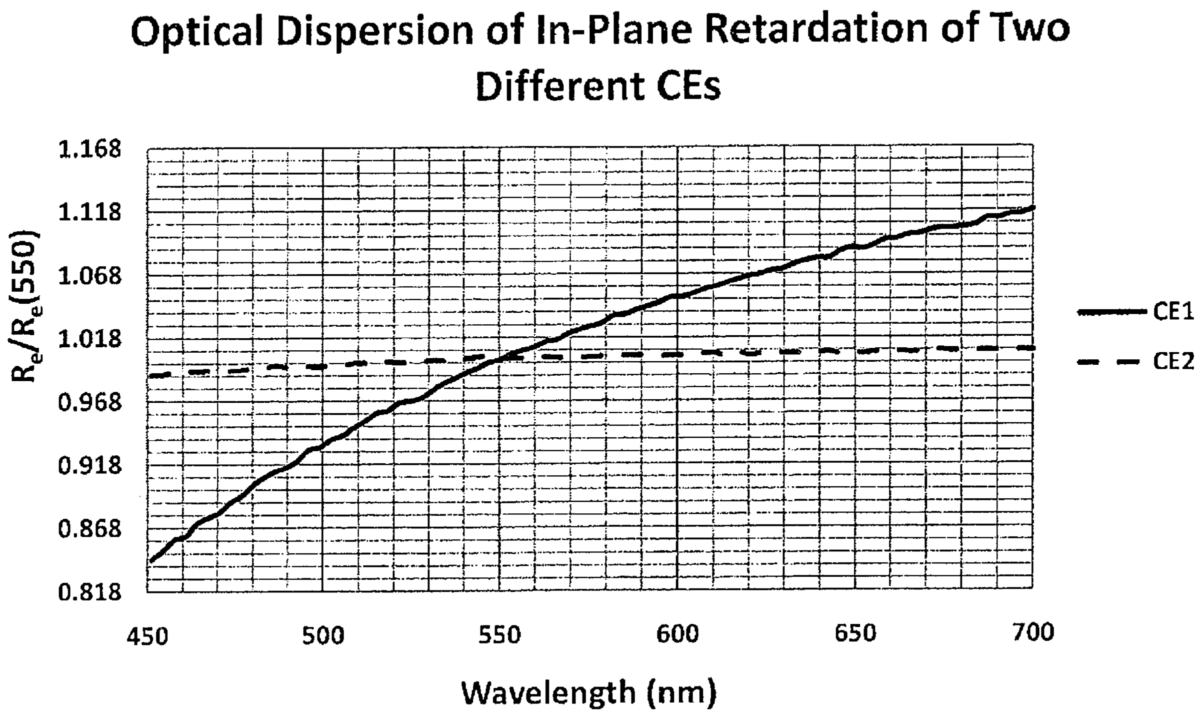
Optical Dispersion of In-Plane Retardation of Two Different CEs
1.168
1.118
1.068
1.018
0.968
0.918
0.868
0.818
$R_e/R_e(550)$
450
500
550
600
650
700
Wavelength (nm)
CE1
CE2

Fig. 3(a)

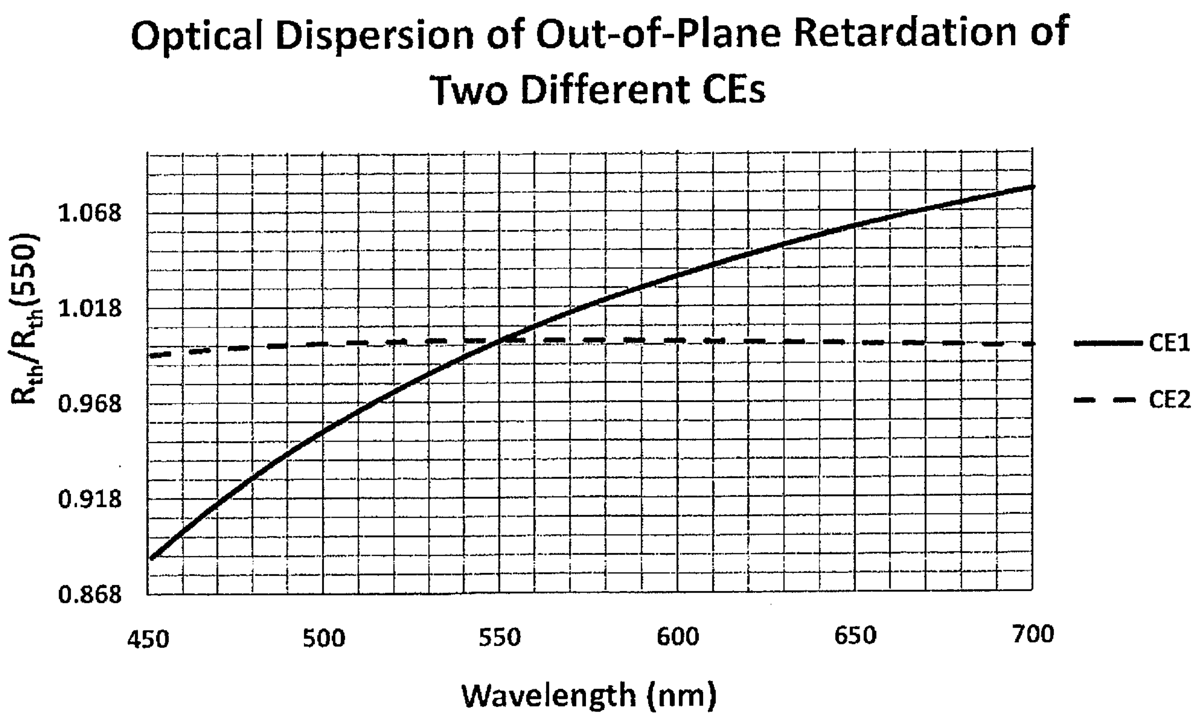
Optical Dispersion of Out-of-Plane Retardation of Two Different CEs
1.068
1.018
0.968
0.918
0.868
$R_{th}/R_{th}(550)$
450
500
550
600
650
700
Wavelength (nm)
CE1
CE2

Fig. 3(b)

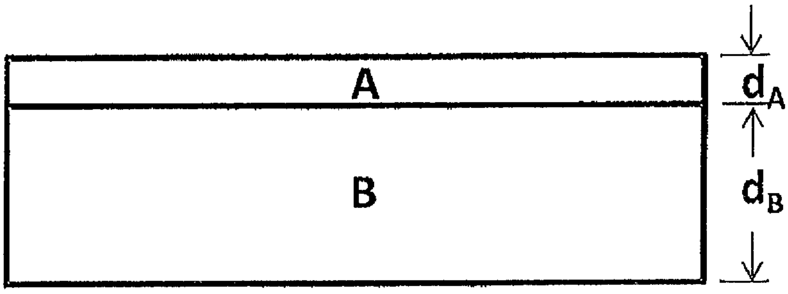


Fig. 4(a)

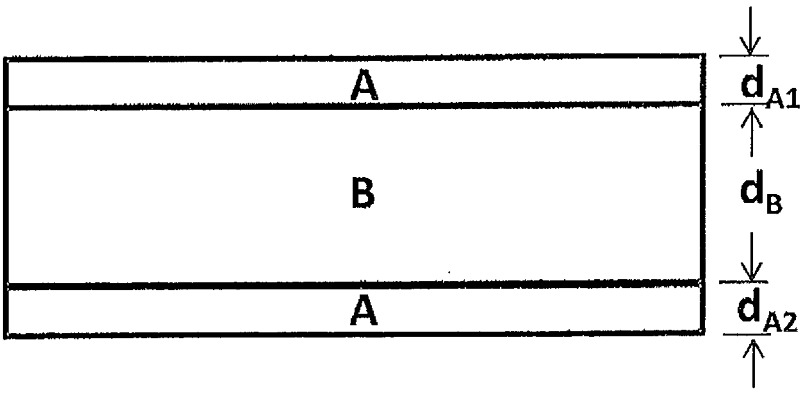


Fig. 4(b)

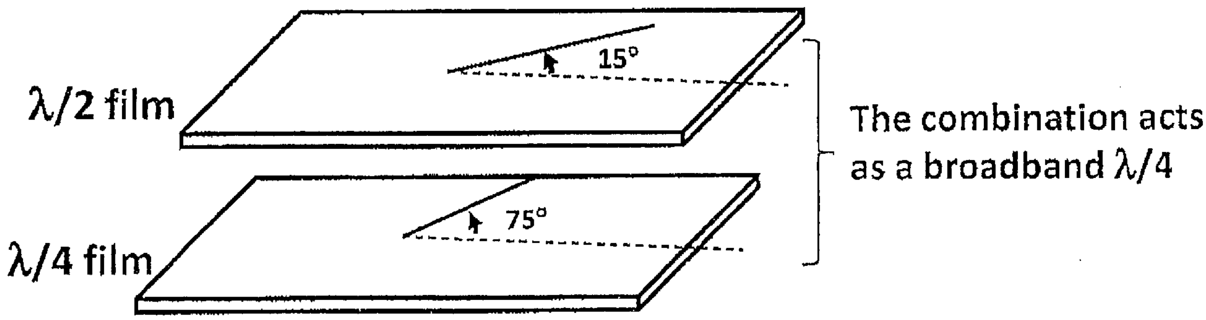


Fig. 5
(Prior Art)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61360941 B
- US 2008107829 A1
- US 2010029927 A1
- JP 2004294798 A
- JP 2010044245 A
- JP 2008197561 A
- JP 2006293342 A
- US 2008192192 A1
- US 2003020208 A1
- US 20090054638 A
- US 20090050842 A
- US 20100029927 A
- US 539817 A
- WO 2010019245 A
- US 20090096962 A
- US 2327770 A
- US 4592885 A
- US 7172713 B
- US 20050133953 A
- US 20100055356 A
- US 12539817 B


### Non-patent literature cited in the description


- **MASAYUKI YAMAGUCHI et al.** *Macromolecules,* 2009, vol. 42, 9034-9040
- **AKIHIKO UCHIYAMA et al.** *Jpn. J. Appl. Phys.,* 2003, vol. 42, 3503-3507
- **AKIHIKO UCHIYAMA et al.** *Jpn. J. Appl. Phys.,* 2003, vol. 42, 6941-6945
- *Macromolecules,* 1991, vol. 24, 3050-3059
- Cellulose Esters, Organic Esters. **S. GEDON et al.** Kirk-Othmer Encyclopedia of Chemical Technology. John Wiley & Sons, 2004, vol. 5, 412-444
- **D. KLEMM et al.** Comprehensive Cellulose Chemistry: Volume 2 Functionalization of Cellulose. Wiley-VCH, 1998
- **PANCHARATNAM.** *Proceedings of the Indian Academy of Science, Sec. A,* 1955, vol. 41, 130-136
- **TAE-HOON YOON et al.** *Optics Letters,* 2000, vol. 25 (20), 1547-1549